# FASCICULE DE BREVET EUROPEEN

(11) **EP 1 526 285 B1**
(45) Date de publication et mention de la délivrance du brevet: **01.05.2013**
(21) Numéro de dépôt: 04292465.4
(22) Date de dépôt: 18.10.2004
(51) Int. Cl.: F04D 29/02, F04D 29/32, F01D 5/28

(54) **Aube de turbomachine, notamment aube de soufflante et son procédé de fabrication**
Turbomaschinenschaufel, insbesondere Verdichterschaufel und ihr Herstellungsverfahren
Turbo engine blade, particularly compressor blade and its fabrication method

(30) Priorité: 20.10.2003 FR 0312256
(43) Date de publication de la demande: 27.04.2005
(73) Titulaire: SNECMA, 75015 Paris (FR)
(72) Inventeur: Dambrine, Bruno, 77820 Le Chatelet En Brie (FR); Molinari, Olivier, 77210 Avon (FR); Coupe, Dominique, 33185 Le Haillan (FR)
(74) Mandataire: Cardy, Sophie Marie

(56) Documents cités:
- EP-A- 0 341 575
- FR-A- 2 610 951
- US-A- 5 013 216
- US-A- 5 279 892
- US-A- 5 672 417
- US-B1- 6 431 837

## Description

L'invention concerne une aube de turbomachine composite comprenant une préforme en fils ou fibres tissé(e)s en trois dimensions et un liant maintenant la disposition relative entre les fils de la préforme, ladite préforme étant formée de fils de chaîne et de fils de trame, la direction des fils de chaîne formant la direction longitudinale de la préforme.

De manière plus particulière, la présente invention se rapporte à une aube de soufflante pour turbo-réacteur.

Egalement, la présente invention se rapporte au procédé de fabrication de ces aubes.

De manière habituelle, les aubes de soufflantes réalisées en matériau composite, en particulier à fibres de carbone, sont réalisées à partir d'un empilement de plis unidirectionnels préimprégnés que l'on place dans un moule en orientant différemment les plis successifs, avant compactage et polymérisation à l'autoclave. Cette technique très délicate requiert d'effectuer les opérations d'empilage de plis de manière manuelle, ce qui est long et coûteux.

Il a aussi été proposé de préparer des préformes tissées de fibres sèches qui sont ensuite assemblées par couture, avant une imprégnation par résine par injection dans un moule fermé. Une alternative a consisté à réaliser une seule préforme tissée qui est montée avec un ou plusieurs inserts pleins avant injection. Ces solutions (US 5 672 417 et US 5 013 216) présentent toutefois l'inconvénient de nécessiter l'assemblage de plusieurs pièces et de créer dans ces zones d'assemblage, des sites privilégiés de fragilité, par exemple de délaminage, ce qui est très néfaste en termes de résistance mécanique, notamment pour la tenue aux impacts.

La présente invention a pour objectif de fournir une préforme en fils ou fibres tissé(e)s en trois dimensions permettant de former à elle seule, après découpe éventuelle et injection, la pièce finale formant l'aube de turbomachine, sans recourir à l'utilisation d'inserts ou de tout autre élément rapporté.

La présente invention a également pour objectif de réaliser une aube comprenant une préforme en fils ou fibres tissé(e)s en trois dimensions qui présente des caractéristiques mécaniques non homogènes afin de tenir compte des différences de sollicitation, notamment mécaniques, auxquelles peuvent être soumises les deux parties différentes destinées à former respectivement le pied et le corps de l'aube.

A cet effet, selon la présente invention, ladite préforme comporte au moins une première partie réalisée selon une première armure, formant la pale de l'aube, et une deuxième partie réalisée selon une deuxième armure, formant le pied de l'aube, la première partie et la deuxième partie étant séparées par une zone de transition dans laquelle la première armure est progressivement modifiée pour aboutir à la deuxième armure, ce par quoi on obtient une diminution au moins de l'épaisseur de l'aube entre la deuxième partie et la première partie.

De cette manière, on comprend que par la présence d'une première armure, correspondant à une première partie de la préforme, et à la présence d'une deuxième armure, correspondant à une deuxième partie de la préforme, on réalise successivement, par tissage en continu selon une direction longitudinale, deux parties avec des motifs de tissage différents, donc avec des propriétés de résistance mécanique différentes.

Ainsi, on comprend que, du fait des deux armures de tissage réalisées successivement dans une telle préforme, ladite première partie et ladite deuxième partie présentent une dimension différente selon au moins une direction perpendiculaire à ladite direction longitudinale. Ceci permet la réalisation d'une préforme avec des dimensions différentes dans ladite direction, formant notamment l'épaisseur de l'aube, entre la première partie (corps de l'aube) et la deuxième partie (pied de l'aube).

Avantageusement, on prévoit que ladite première partie et ladite deuxième partie ne présentent pas le même nombre de fils de chaîne. Cette disposition permet de renforcer le fait que ladite première partie et ladite deuxième partie présentent une dimension différente selon au moins une direction perpendiculaire à ladite direction longitudinale.

De préférence, lesdits fils ou fibres appartiennent au groupe formé des fibres de carbone, des fibres de verre, des fibres de silice, des fibres de carbure de silicium, des fibres d'alumine, des fibres aramides et des fibres de polyamides aromatiques.

Selon une disposition très avantageuse, l'angle d'embuvage des fils de chaîne est compris entre 2 et 10°, que ce soit dans la première partie (corps de l'aube) ou dans la deuxième partie (pied de l'aube). Ainsi, grâce à cette valeur faible, on conserve une forte cohésion entre les fils de chaîne et les fils de trame tissés entre eux dans une configuration en trois dimensions, de sorte que l'on obtient une aube ayant une bonne tenue à l'impact, l'énergie du choc étant facilement absorbée, ce qui se traduit par des endommagements éventuels qui restent très localisés.

Selon une autre disposition avantageuse, ladite première partie et ladite deuxième partie présentent un rapport volumique chaîne/trame différent. Cette solution de modification du taux de fibres présente aussi l'avantage supplémentaire de permettre de modifier l'angle d'embuvage (angle que forme un fil de chaîne ou un fil de trame par rapport à un plan horizontal) entre la première armure (première partie) et la deuxième armure (deuxième partie), ce qui influe directement sur les propriétés mécaniques des deux parties correspondantes, notamment le module d'élasticité et la tenue aux impacts, et sur l'épaisseur relative des première et deuxième parties.

De préférence, ladite première partie présente un rapport volumique chaîne/trame compris entre 80/20% et 50/50% et en ce que ladite deuxième partie présente un rapport volumique chaîne/trame compris entre 30/70% et 50/50%, de préférence de l'ordre de 40/60%.

Egalement, de manière préférentielle et avantageuse, le titre des fils de chaîne varie entre le bord et le reste de l'aube, les fils de chaîne du bord étant plus fins, ce qui permet aussi de modifier les propriétés mécaniques, de l'aube entre sa surface et sa partie centrale, que ce soit pour le pied (deuxième partie) ou pour le corps de l'aube (première partie).

De préférence, le titre des fils de chaîne du bord de l'aube est de l'ordre de 900 tex (fils de 24000 filaments) et en ce que le titre des fils de chaîne du reste de l'aube est de l'ordre de 1800 tex (fils de 48000 filaments).

Selon un exemple de réalisation préférentiel, la première armure présente un motif de base comprenant au moins trente-six fils de trame disposés en quinconce en alternant des colonnes d'au moins quatre fils de trame superposés dans une direction verticale, séparées dans une direction longitudinale par un pas, et des colonnes d'au moins cinq fils de trame superposés, séparées par le même pas, les fils de trame étant répartis en au moins huit colonnes s'étendant dans une direction verticale, les fils de trame étant ainsi disposés sur au moins neuf niveaux, et au moins vingt-huit fils de chaîne disposés sur au moins huit plans verticaux parallèles entre eux en direction transversale, avec une alternance de plans d'un premier type, contenant au moins quatre fils de chaîne parallèles superposés, et de plans d'un deuxième type contenant au moins trois fils de chaîne parallèles superposés, lesdits plans d'un premier type ayant :
- un premier fil de chaîne reliant un fil de trame extrême supérieur d'une colonne d'au moins cinq fils de trame au fil de trame intermédiaire supérieur d'une colonne d'au moins cinq fils de trame espacée de la colonne précédente par au moins deux pas, et revenant sur un fil de trame extrême supérieur d'une colonne d'au moins cinq fils de trame, espacée de la première colonne par au moins quatre pas,
- un deuxième fil de chaîne reliant un fil de trame intermédiaire supérieur d'une colonne d'au moins cinq fils de trame au fil de trame médian d'une colonne d'au moins cinq fils de trame espacée de la colonne précédente par au moins deux pas, et revenant sur un fil de trame intermédiaire supérieur d'une colonne d'au moins cinq fils de trame, espacée de la première colonne par au moins quatre pas,
- un troisième fil de chaîne reliant un fil de trame médian d'une colonne d'au moins cinq fils de trame au fil de trame intermédiaire inférieur d'une colonne d'au moins cinq fils de trame espacée de la colonne précédente par au moins deux pas, et revenant sur un fil de trame médian d'une colonne d'au moins cinq fils de trame, espacée de la première colonne par au moins quatre pas ,
- un quatrième fil de chaîne reliant un fil de trame intermédiaire inférieur d'une colonne d'au moins cinq fils de trame au fil de trame extrême inférieur d'une colonne d'au moins cinq fils de trame espacée de la colonne précédente par au moins deux pas, et revenant sur un fil de trame intermédiaire inférieur d'une colonne d'au moins cinq fils de trame, espacée de la première colonne par au moins quatre pas ;
lesdits plans d'un deuxième type ayant :
- un premier fil de chaîne reliant un fil de trame extrême supérieur d'une colonne d'au moins quatre fils de trame au fil de trame intermédiaire supérieur d'une colonne d'au moins quatre fils de trame espacée de la colonne précédente par au moins deux pas, et revenant sur un fil de trame extrême supérieur d'une colonne d'au moins quatre fils de trame, espacée de la première colonne par au moins quatre pas,
- un deuxième fil de chaîne reliant un fil de trame intermédiaire supérieur d'une colonne d'au moins quatre fils de trame au fil de trame intermédiaire inférieur d'une colonne d'au moins quatre fils de trame espacée de la colonne précédente par au moins deux pas, et revenant sur un fil de trame intermédiaire supérieur d'une colonne d'au moins quatre fils de trame, espacée de la première colonne par au moins quatre pas,
- un troisième fil de chaîne reliant un fil de trame intermédiaire inférieur d'une colonne d'au moins quatre fils de trame au fil de trame extrême inférieur d'une colonne d'au moins quatre fils de trame espacée de la colonne précédente par au moins deux pas, et revenant sur un fil de trame intermédiaire inférieur d'une colonne d'au moins quatre fils de trame, espacée de la première colonne par au moins quatre pas.

Egalement, selon un exemple de réalisation préférentiel, la deuxième armure présente un motif de base comprenant au moins quarante-cinq fils de trame disposés en quinconce en alternant des colonnes d'au moins quatre fils de trame superposés dans une direction verticale, séparées dans une direction longitudinale par un pas, et des colonnes d'au moins cinq fils de trame superposés, séparées par le même pas, les fils de trame étant répartis en au moins dix colonnes s'étendant dans une direction verticale, les fils de trame étant ainsi disposés sur au moins neuf niveaux, et au moins quarante fils de chaîne disposés sur au moins dix plans verticaux parallèles entre eux en direction transversale , chaque plan contenant au moins quatre fils de chaîne parallèles superposés, avec une alternance de plans d'un premier type et de plans d'un deuxième type, lesdits plans d'un premier type ayant :
- un premier fil de chaîne reliant un fil de trame extrême supérieur d'une colonne d'au moins cinq fils de trame au fil de trame extrême supérieur d'une colonne d'au moins quatre fils de trame espacée de la colonne précédente par au moins deux pas et demi, et revenant sur un fil de trame extrême supérieur d'une colonne d'au moins cinq fils de trame, espacée de la première colonne par au moins cinq pas,
- un deuxième fil de chaîne reliant un fil de trame intermédiaire supérieur d'une colonne d'au moins cinq fils de trame au fil de trame intermédiaire supérieur d'une colonne d'au moins quatre fils de trame espacée de la colonne précédente par au moins deux pas et demi, et revenant sur un fil de trame intermédiaire supérieur d'une colonne d'au moins cinq fils de trame, espacée de la première colonne par au moins cinq pas,
- un troisième fil de chaîne reliant un fil de trame médian d'une colonne d'au moins cinq fils de trame au fil de trame intermédiaire inférieur d'une colonne d'au moins quatre fils de trame espacée de la colonne précédente par au moins deux pas et demi, et revenant sur un fil de trame médian d'une colonne d'au moins cinq fils de trame, espacée de la première colonne par au moins cinq pas,
- un quatrième fil de chaîne reliant un fil de trame intermédiaire inférieur d'une colonne d'au moins cinq fils de trame au fil de trame extrême inférieur d'une colonne d'au moins quatre fils de trame espacée de la colonne précédente par au moins deux pas et demi, et revenant sur un fil de trame intermédiaire inférieur d'une colonne d'au moins cinq fils de trame, espacée de la première colonne par au moins cinq pas ;
lesdits plans d'un deuxième type ayant :
- un premier fil de chaîne reliant un fil de trame extrême supérieur d'une colonne d'au moins quatre fils de trame au fil de trame intermédiaire supérieur d'une colonne d'au moins cinq fils de trame espacée de la colonne précédente par au moins deux pas et demi, et revenant sur un fil de trame extrême supérieur d'une colonne d'au moins quatre fils de trame, espacée de la première colonne par au moins cinq pas,
- un deuxième fil de chaîne reliant un fil de trame intermédiaire supérieur d'une colonne d'au moins quatre fils de trame au fil de trame médian d'une colonne d'au moins cinq fils de trame espacée de la colonne précédente par au moins deux pas et demi, et revenant sur un fil de trame intermédiaire supérieur d'une colonne d'au moins quatre fils de trame, espacée de la première colonne par au moins cinq pas,
- un troisième fil de chaîne reliant un fil de trame intermédiaire inférieur d'une colonne d'au moins quatre fils de trame au fil de trame intermédiaire inférieur d'une colonne d'au moins cinq fils de trame espacée de la colonne précédente par au moins deux pas et demi, et revenant sur un fil de trame intermédiaire inférieur d'une colonne d'au moins quatre fils de trame, espacée de la première colonne par au moins cinq pas,
- un quatrième fil de chaîne reliant un fil de trame extrême inférieur d'une colonne d'au moins quatre fils de trame au fil de trame extrême inférieur d'une colonne d'au moins cinq fils de trame espacée de la colonne précédente par au moins deux pas et demi, et revenant sur un fil de trame extrême inférieur d'une colonne d'au moins quatre fils de trame, espacée de la première colonne par au moins cinq pas,
les groupes parallèles de quatre fils de chaîne étant décalées longitudinalement du pas d'un plan au plan voisin.

Selon une autre disposition avantageuse, la deuxième partie de l'aube présente une zone de coeur avec des fils de trame plus gros ayant un titre différent de celui des fils de trame qui entourent ladite zone de coeur.

Dans ce cas, on prévoit préférentiellement que le titre des fils de trame de la zone de coeur de la deuxième partie de l'aube est de l'ordre de 3600 tex (fils de 96000 filaments) et en ce que le titre des fils de trame entourant ladite zone de coeur est de l'ordre de 1800 tex (fils de 48000 filaments).

De préférence, ledit liant appartient au groupe formé des résines organiques, en particulier les résines époxy, des produits réfractaires et des métaux.

Egalement, on prévoit avantageusement que ladite aube selon l'invention est une aube de soufflante pour turbo-réacteur.

Enfin, la présente invention porte aussi sur un procédé de fabrication d'une aube de soufflante pour turbo-réacteur, qui se caractérise en ce qu'il comprend les étapes suivantes :
- on tisse des fils de chaîne et des fils de trame afin de former une préforme en fils ou fibres tissés en trois dimensions, formée de fils de chaîne et de fils de trame, la direction des fils de chaîne formant la direction longitudinale de la préforme, ladite préforme comportant au moins une première partie réalisée selon une première armure (A) et une deuxième partie réalisée selon une deuxième armure (B), ladite première partie et ladite deuxième partie étant séparées par une zone de transition dans laquelle la première armure est progressivement modifiée pour aboutir à la deuxième armure, ce par quoi on obtient une diminution au moins de l'épaisseur de l'aube entre la deuxième partie et la première partie,
- on découpe ladite préforme selon la forme et les dimensions des parties constitutives de l'aube ;
- on fournit un moule dans lequel on place ladite préforme ;
- on injecte dans ledit moule un liant comprenant une résine thermodurcissable afin d'imprégner toute la préforme ;
- on chauffe ledit moule ; et
- on sort du moule une pièce moulée.

D'autres avantages et caractéristiques de l'invention ressortiront à la lecture de la description suivante faite à titre d'exemple et en référence aux dessins annexés dans lesquels :
- la figure 1 montre schématiquement un métier à tisser de type Jacquard pouvant réaliser le tissage en trois dimensions d'une préforme selon l'invention,
- la figure 2 représente schématiquement, en coupe selon les directions longitudinale et verticale, les fils de trame et de chaîne contenus dans un premier plan de la première armure,
- les figures 3 à 9 sont des vues similaires à celle de la figure 2 pour les fils de trame et de chaîne contenus respectivement dans un deuxième plan, un troisième plan, un quatrième plan, un cinquième plan, un sixième plan, un septième plan et un huitième plan de la première armure, ces plans étant parallèles au premier plan de la figure 2,
- les figures 10 à 19 sont des vues similaires à celle de la figure 2 pour les fils de trame et de chaîne contenus dans un premier plan, un deuxième plan, un troisième plan, un quatrième plan, un cinquième plan, un sixième plan, un septième plan, un huitième plan, un neuvième plan et un dixième plan de la deuxième armure, et
- la figure 20 montre, en coupe selon les directions longitudinale et verticale, la zone de transition depuis la deuxième armure B à gauche, vers la première armure A à droite,
- la figure 21 montre la zone de transition depuis le dessus de la préforme, depuis la deuxième armure B en bas, vers la première armure A en haut,
- la figure 22 représente de manière schématique en coupe selon les directions longitudinale et verticale, montée sur le métier à tisser de type Jacquard, une portion d'une aube : à gauche le pied (partie B) et à droite la pale (partie A),
- la figure 23 représente une partie agrandie d'une vue similaire à celle de la figure 22 pour une variante de réalisation de l'aube,
- les figures 24 et 25 représentent schématiquement, en coupe selon les directions longitudinale et verticale, les fils de trame et de chaîne contenus dans un premier plan respectivement d'une première et d'une deuxième variantes de réalisation de la première armure, et
- la figure 26 représente schématiquement, en coupe et de selon les directions longitudinale et verticale, les fils de trame et de chaîne contenus dans un premier plan et dans un deuxième plan d'une troisième variante de réalisation de la première armure.

Dans la suite de la description, la direction longitudinale, la direction transversale et la direction verticale correspondent respectivement aux directions des flèches x, y et z sur les figures.

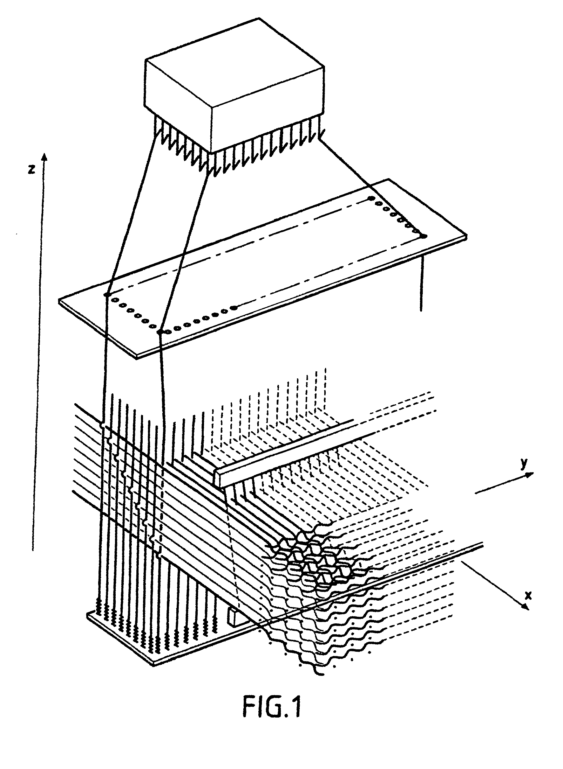

Sur la figure 1, est schématiquement représenté un métier à tisser de type Jacquard sur lequel sont montés des fils de chaîne, qui sont orientés selon la direction longitudinale (flèche x) et qui s'étendent sur plusieurs couches superposées selon la direction verticale (flèche z), et des fils de trame orientés selon la direction transversale (flèche y).

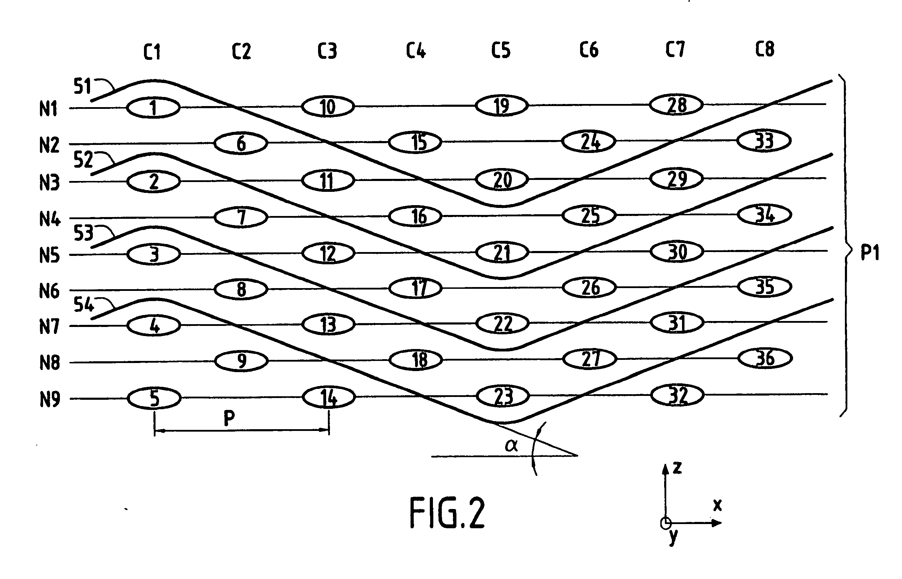

Les figures 2 à 9 montrent le motif de base de la première armure d'une préforme conforme à la présente invention. Cette première armure comprend trente-six fils de trame 1 à 36 (c'est leur section qui est visible), disposés en quinconce sur neuf niveaux superposés N1 à N9, et répartis en huit colonnes C1 à C8, selon :
- une première colonne C1 de cinq fils de trame superposés 1 à 5 situés respectivement aux niveaux N1, N3 N5, N7 et N9 ;
- une deuxième colonne C2 de quatre fils de trame superposés 6 à 9 situés respectivement aux niveaux N2, N4, N6 et N8 ;
- une troisième colonne C3 de cinq fils de trame superposés 10 à 14 situés respectivement aux niveaux N1, N3, N5, N7 et N9 ;
- une quatrième colonne C4 de quatre fils de trame superposés 15 à 18 situés respectivement aux niveaux N2, N4, N6 et N8 ;
- une cinquième colonne C5 de cinq fils de trame superposés 19 à 23 situés respectivement aux niveaux N1, N3, N5, N7 et N9 ;
- une sixième colonne C6 de quatre fils de trame superposés 24 à 27 situés respectivement aux niveaux N2, N4, N6 et N8 ;
- une septième colonne C7 de cinq fils de trame superposés 28 à 32 situés respectivement aux niveaux N1, N3, N5, N7 et N9 ; et
- une huitième colonne C8 de quatre fils de trame superposés 33 à 36 situés respectivement aux niveaux N2, N4, N6 et N8.

Les colonnes impaires C1, C3, C5, C7 formées de cinq fils de trame superposés sont séparés les unes des autres par des intervalles constants selon la direction longitudinale, correspondant à un pas P prédéterminé. Le même pas P sépare les colonnes paires C2, C4, C6, C8 formées de quatre fils de trame superposés, qui s'intercalent entre les colonnes précédentes, ces quatre fils de trame étant disposés en quinconce avec les cinq fils de trame des deux colonnes impaires voisines.

Ce motif de base de la première armure se répète dans la direction longitudinale (direction des fils de chaîne), dans la direction transversale (direction des fils de trame), et dans la direction verticale (direction de l'épaisseur), en formant des nappes.

Les fils de trame 1 à 36 sont liés entre eux par vingt-huit fils de chaîne 51 à 78 qui sont disposés dans huit plans parallèles P1 à P8 visibles respectivement sur les figures 2 à 9 et qui sont orientés selon les directions longitudinale (flèche x) et verticale (flèche z).

Les plans P1 à P8 se succèdent dans la direction transversale en étant régulièrement décalés entre eux d'un pas toujours identique et qui est compris entre 1,5 et 3 mm, en étant de préférence égal à 2,1mm.

Chacun de ces plans P1 à P8 contient trois ou quatre fils de chaîne parallèles, superposés, la disposition de chaque plan étant la suivante :

Dans le plan P1 (figure 2), un premier fil de chaîne 51 relie le fil de trame extrême supérieur 1 de la colonne C1 au fil de trame intermédiaire supérieur 20 de la colonne C5 (en descendant), et il revient (en montant) sur le fil de trame extrême supérieur, correspondant au fil 1, dans le motif de base suivant. Un deuxième fil de chaîne 52 relie le fil de trame intermédiaire supérieur 2 de la colonne C1 au fil de trame médian 21 de la colonne C5 (en descendant), et il revient (en montant) sur le fil de trame intermédiaire supérieur, correspondant au fil 2, dans le motif de base suivant. Un troisième fil de chaîne 53 relie le fil de trame médian 3 de la colonne C1 au fil de trame intermédiaire inférieur 22 de la colonne C5 (en descendant), et il revient (en montant) sur le fil de trame médian, correspondant au fil 3, dans le motif de base suivant. Un quatrième fil de chaîne 54 relie le fil de trame intermédiaire inférieur 4 de la colonne C1 au fil de trame extrême inférieur 23 de la colonne C5 (en descendant), et il revient (en montant) sur le fil de trame intermédiaire inférieur, correspondant au fil 4, dans le motif de base suivant.

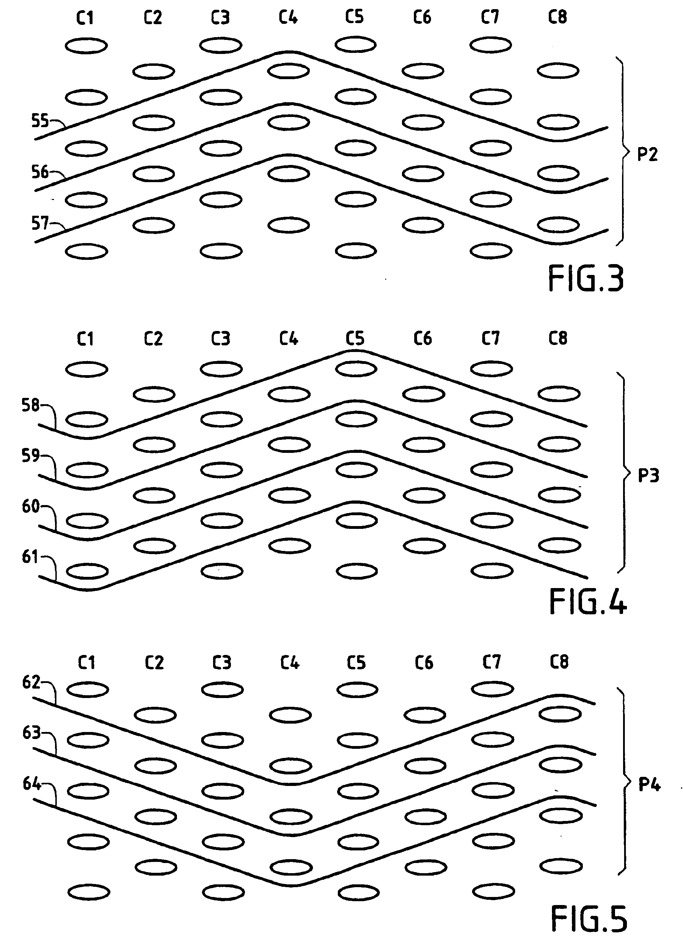

Dans le plan P2 (figure 3), un premier fil de chaîne 55 relie le fil de trame extrême supérieur 15 de la colonne C4 au fil de trame intermédiaire supérieur 34 de la colonne C8 (en descendant), et il revient (en montant) sur le fil de trame extrême supérieur, correspondant au fil 15, dans le motif de base suivant. Un deuxième fil de chaîne 56 relie le fil de trame intermédiaire supérieur 16 de la colonne C4 au fil de trame intermédiaire inférieur 35 de la colonne C8 (en descendant), et il revient (en montant) sur le fil de trame intermédiaire supérieur, correspondant au fil 16, dans le motif de base suivant. Un troisième fil de chaîne 57 relie le fil de trame intermédiaire inférieur 17 de la colonne C4 au fil de trame extrême inférieur 36 de la colonne C8 (en descendant), et il revient (en montant) sur le fil de trame intermédiaire inférieur, correspondant au fil 17, dans le motif de base suivant.

Dans le plan P3 (figure 4 ), un premier fil de chaîne 58 relie le fil de trame extrême supérieur 19 de la colonne C5 au fil de trame intermédiaire supérieur 2 de la colonne C1 (en descendant), dans le motif de base suivant, et il revient (en montant) sur le fil de trame extrême supérieur, correspondant au fil 19, dans le motif de base suivant. Un deuxième fil de chaîne 59 relie le fil de trame intermédiaire supérieur 20 de la colonne C5 au fil de trame médian 3 de la colonne C1 (en descendant), dans le motif de base suivant, et il revient (en montant) sur le fil de trame intermédiaire supérieur, correspondant au fil 20 dans le motif de base suivant. Un troisième fil de chaîne 60 relie le fil de trame médian 21 de la colonne C5 au fil de trame intermédiaire inférieur 4 de la colonne C3 (en descendant), dans le motif de base suivant, et il revient (en montant) sur le fil de trame médian, correspondant au fil 21, dans le motif de base suivant. Un quatrième fil de chaîne 61 relie le fil de trame intermédiaire inférieur 22 de la colonne C1 au fil de trame extrême inférieur 5 de la colonne C1 (en descendant), dans le motif de base suivant, et il revient (en montant) sur le fil de trame intermédiaire inférieur, correspondant au fil 22, dans le motif de base suivant.

Dans le plan P4 (figure 5), un premier fil de chaîne 62 relie le fil de trame extrême supérieur 33 de la colonne C8 au fil de trame intermédiaire supérieur 16 de la colonne C4 (en descendant), dans le motif de base suivant, et il revient (en montant) sur le fil de trame extrême supérieur, correspondant au fil 33, dans le motif de base suivant. Un deuxième fil de chaîne 63 relie le fil de trame intermédiaire supérieur 34 de la colonne C8 au fil de trame intermédiaire inférieur 17 de la colonne C4 (en descendant), dans le motif de base suivant, et il revient (en montant) sur le fil de trame intermédiaire supérieur, correspondant au fil 34, dans le motif de base suivant. Un troisième fil de chaîne 64 relie le fil de trame intermédiaire inférieur 35 de la colonne C8 au fil de trame extrême inférieur 18 de la colonne C4 (en descendant), dans le motif de base suivant, et il revient (en montant) sur le fil de trame intermédiaire inférieur, correspondant au fil 35, dans le motif de base suivant.

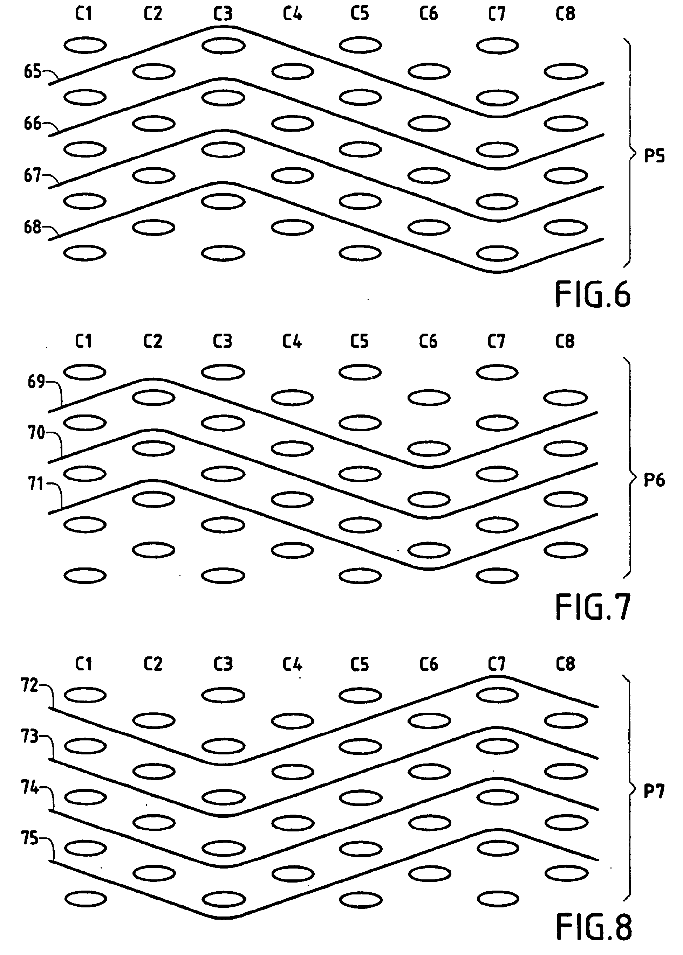

Dans le plan P5 (figure 6), un premier fil de chaîne 65 relie le fil de trame extrême supérieur 10 de la colonne C3 au fil de trame intermédiaire supérieur 29 de la colonne C7 (en descendant), et il revient (en montant) sur le fil de trame extrême supérieur, correspondant au fil 10, dans le motif de base suivant. Un deuxième fil de chaîne 66 relie le fil de trame intermédiaire supérieur 11 de la colonne C3 au fil de trame médian 30 de la colonne C7 (en descendant), et il revient (en montant) sur le fil de trame intermédiaire supérieur, correspondant au fil 11, dans le motif de base suivant. Un troisième fil de chaîne 67 relie le fil de trame médian 12 de la colonne C3 au fil de trame intermédiaire inférieur 31 de la colonne C7 (en descendant), et il revient (en montant) sur le fil de trame médian, correspondant au fil 12, dans le motif de base suivant. Un quatrième fil de chaîne 68 relie le fil de trame intermédiaire inférieur 13 de la colonne C3 au fil de trame extrême inférieur 32 de la colonne C7 (en descendant), et il revient (en montant) sur le fil de trame intermédiaire inférieur, correspondant au fil 13, dans le motif de base suivant.

Dans le plan P6 (figure 7), un premier fil de chaîne 69 relie le fil de trame extrême supérieur 6 de la colonne C2 au fil de trame intermédiaire supérieur 25 de la colonne C6 (en descendant), et il revient (en montant) sur le fil de trame extrême supérieur, correspondant au fil 6, dans le motif de base suivant. Un deuxième fil de chaîne 70 relie le fil de trame intermédiaire supérieur 7 de la colonne C2 au fil de trame intermédiaire inférieur 26 de la colonne C6 (en descendant), et il revient (en montant) sur le fil de trame intermédiaire supérieur, correspondant au fil 7, dans le motif de base suivant. Un troisième fil de chaîne 71 relie le fil de trame intermédiaire inférieur 8 de la colonne C2 au fil de trame extrême inférieur 27 de la colonne C6 (en descendant), et il revient (en montant) sur le fil de trame intermédiaire inférieur, correspondant au fil 8, dans le motif de base suivant.

Dans le plan P7 (figure 8), un premier fil de chaîne 72 relie le fil de trame extrême supérieur 28 de la colonne C7 au fil de trame intermédiaire supérieur 11 de la colonne C3 (en descendant), dans le motif de base suivant, et il revient (en montant) sur le fil de trame extrême supérieur, correspondant au fil 28, dans le motif de base suivant. Un deuxième fil de chaîne 73 relie le fil de trame intermédiaire supérieur 29 de la colonne C7 au fil de trame médian 12 de la colonne C3 (en descendant), dans le motif de base suivant, et il revient (en montant) sur le fil de trame intermédiaire supérieur, correspondant au fil 29 dans le motif de base suivant. Un troisième fil de chaîne 74 relie le fil de trame médian 30 de la colonne C7 au fil de trame intermédiaire inférieur 13 de la colonne C3 (en descendant), dans le motif de base suivant, et il revient (en montant) sur le fil de trame médian, correspondant au fil 30, dans le motif de base suivant. Un quatrième fil de chaîne 75 relie le fil de trame intermédiaire inférieur 31 de la colonne C7 au fil de trame extrême inférieur 14 de la colonne C3 (en descendant), dans le motif de base suivant, et il revient (en montant) sur le fil de trame intermédiaire inférieur, correspondant au fil 31, dans le motif de base suivant.

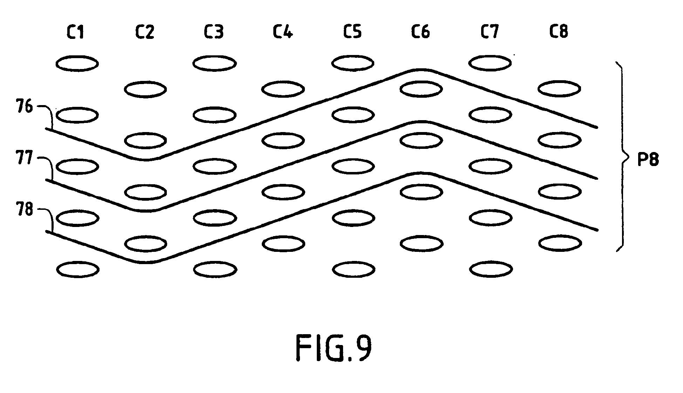

Enfin, dans le plan P8 (figure 9), un premier fil de chaîne 76 relie le fil de trame extrême supérieur 24 de la colonne C6 au fil de trame intermédiaire supérieur 7 de la colonne C2 (en descendant), dans le motif de base suivant, et il revient (en montant) sur le fil de trame extrême supérieur, correspondant au fil 24, dans le motif de base suivant. Un deuxième fil de chaîne 77 relie le fil de trame intermédiaire supérieur 25 de la colonne C6 au fil de trame intermédiaire inférieur 8 de la colonne C2 (en descendant), dans le motif de base suivant, et il revient (en montant) sur le fil de trame intermédiaire supérieur, correspondant au fil 25, dans le motif de base suivant. Un troisième fil de chaîne 78 relie le fil de trame intermédiaire inférieur 26 de la colonne C6 au fil de trame extrême inférieur 9 de la colonne C2 (en descendant), dans le motif de base suivant, et il revient (en montant) sur le fil de trame intermédiaire inférieur, correspondant au fil 26, dans le motif de base suivant.

On remarque qu'en passant d'un plan à un autre plan, voisin, on alterne le recours à une configuration à trois fils de chaîne parallèles (plans d'un premier type (P1, P3, P5, P7)) et à une configuration à quatre fils de chaîne parallèles (plans d'un deuxième type (P2, P4, P6, P8)), ces configurations étant décalées selon la direction longitudinale (flèche x sur la figure 2) de manière irrégulière : 1,5 P entre P1 et P2 ; 0,5 P entre P2 et P3 ; 1,5 P entre P3 et P4 ;1,5 P entre P4 et P5 ; -0,5 P entre P5 et P6, -1,5 P entre P6 et P7 et - 0,5 P entre P7 et P8.

Ainsi, on obtient une première armure (A) qui présente un motif de base comprenant exactement trente-six fils de trame (1 à 36) disposés en quinconce en alternant des colonnes (C2, C4, C6, C8) d'exactement quatre fils de trame superposés dans une direction verticale, séparées dans la direction longitudinale par un pas (P), et des colonnes (C1, C3, C5, C7) d'exactement cinq fils de trame superposés, séparées entre elles selon la direction longitudinale par le même pas (P). Les fils de trame (1 à 36) sont répartis en exactement huit colonnes (C1 à C8) s'étendant dans une direction verticale, les fils de trame (1 à 36) étant ainsi disposés sur exactement neuf niveaux (N1 à N9). Le motif de base de la première armure comprend également exactement vingt-huit fils de chaîne (51 à 78) disposés sur exactement huit plans verticaux parallèles (P1 à P8) entre eux en direction transversale, avec une alternance de plans d'un premier type (P1, P3, P5, P7), contenant exactement quatre fils de chaîne parallèles superposés, et de plans d'un deuxième type (P2, P4, P6, P8) contenant exactement trois fils de chaîne parallèles superposés.

Lesdits plans d'un premier type (P1, P3, P5, P7) présentent :
- un premier fil de chaîne (51, 58, 65, 72) reliant un fil de trame extrême supérieur (1, 19, 10, 28) d'une colonne (C1, C5, C3, C7) d'exactement cinq fils de trame au fil de trame intermédiaire supérieur (20, 2, 29, 11) d'une colonne (C5, C1, C7, C3) d'exactement cinq fils de trame espacée de la colonne précédente par exactement deux pas (P), et revenant sur un fil de trame extrême supérieur (1, 19, 10, 28)) d'une colonne (C1, C5, C3, C7) d'exactement cinq fils de trame, espacée de la première colonne par exactement quatre pas (P),
- un deuxième fil de chaîne (52, 59, 66, 73) reliant un fil de trame intermédiaire supérieur (2, 20, 11, 29) d'une colonne (C1, C5, C3, C7) d'exactement cinq fils de trame au fil de trame médian (21, 3, 30, 12) d'une colonne (C5, C1, C7, C3) d'exactement cinq fils de trame espacée de la colonne précédente par exactement deux pas (P), et revenant sur un fil de trame intermédiaire supérieur (2, 20, 11, 29) d'une colonne (C1, C5, C3, C7) d'exactement cinq fils de trame, espacée de la première colonne par exactement quatre pas (P),
- un troisième fil de chaîne (53, 60, 67, 74) reliant un fil de trame médian (3, 21, 12, 30) d'une colonne (C1, C5, C3, C7) d'exactement cinq fils de trame au fil de trame intermédiaire inférieur (22, 4, 31, 13) d'une colonne (C5, C1, C7, C3) d'exactement cinq fils de trame espacée de la colonne précédente par exactement deux pas (P), et revenant sur un fil de trame médian (3, 21, 12, 30) d'une colonne (C1, C5, C3, C7) d'exactement cinq fils de trame, espacée de la première colonne par exactement quatre pas (P),
- un quatrième fil de chaîne (54, 61, 68, 75) reliant un fil de trame intermédiaire inférieur (4, 22, 13, 31) d'une colonne (C1, C5, C3, C7) d'exactement cinq fils de trame au fil de trame extrême inférieur (23, 5, 32, 14) d'une colonne (C5, C1, C7, C3) d'exactement cinq fils de trame espacée de la colonne précédente par exactement deux pas (P), et revenant sur un fil de trame intermédiaire inférieur (4, 22, 13, 31) d'une colonne (C1, C5, C3, C7) d'exactement cinq fils de trame, espacée de la première colonne par exactement quatre pas (P).

Lesdits plans d'un deuxième type (P2, P4, P6, P8) présentent :
- un premier fil de chaîne (55, 62, 69, 76) reliant un fil de trame extrême supérieur (15, 33, 6, 24) d'une colonne (C4, C8, C2, C6) d'exactement quatre fils de trame au fil de trame intermédiaire supérieur (34, 16, 25, 7) d'une colonne (C8, C4, C6, C2) d'exactement quatre fils de trame espacée de la colonne précédente par exactement deux pas (P), et revenant sur un fil de trame extrême supérieur (15, 33, 6, 24) d'une colonne (C4, C8, C2, C6) d'exactement quatre fils de trame, espacée de la première colonne par exactement quatre pas (P),
- un deuxième fil de chaîne (56, 63, 70, 77) reliant un fil de trame intermédiaire supérieur (16, 34, 7, 25) d'une colonne (C4, C8, C2, C6) d'exactement quatre fils de trame au fil de trame intermédiaire inférieur (35, 17, 26, 8) d'une colonne (C8, C4, C6, C2) d'exactement quatre fils de trame espacée de la colonne précédente par exactement deux pas (P), et revenant sur un fil de trame intermédiaire supérieur (16, 34, 7, 25) d'une colonne (C4, C8, C2, C6) d'exactement quatre fils de trame, espacée de la première colonne par exactement quatre pas (P),
- un troisième fil de chaîne (57, 64, 71, 78) reliant un fil de trame intermédiaire inférieur (17, 35, 8, 24) d'une colonne (C4, C8, C2, C6) d'exactement quatre fils de trame au fil de trame extrême inférieur (36, 18, 27, 9) d'une colonne (C4, C8, C2, C6) d'exactement quatre fils de trame espacée de la colonne précédente par exactement deux pas (P), et revenant sur un fil de trame intermédiaire inférieur (17, 35, 8, 24) d'une colonne (C4, C8, C2, C6) d'exactement quatre fils de trame, espacée de la première colonne par exactement quatre pas (P).

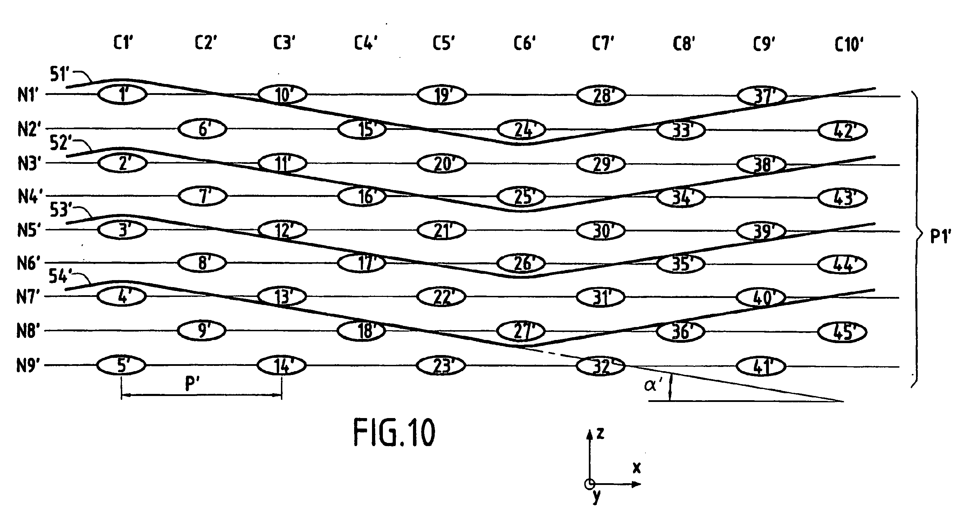

Les figures 10 à 19 montrent le motif de base de la deuxième armure d'une préforme conforme à la présente invention. Cette deuxième armure comprend quarante-cinq fils de trame 1' à 45' (c'est leur section qui est visible), disposés en quinconce sur neuf niveaux superposés N1' à N9', et répartis en dix colonnes C1' à C10', selon :
- une première colonne C1' de cinq fils de trame superposés 1' à 5' situés respectivement aux niveaux N1', N3' N5', N7' et N9' ;
- une deuxième colonne C2' de quatre fils de trame superposés 6' à 9' situés respectivement aux niveaux N2', N4', N6' et N8' ;
- une troisième colonne C3' de cinq fils de trame superposés 10' à 14' situés respectivement aux niveaux N1', N3', N5', N7' et N9' ;
- une quatrième colonne C4' de quatre fils de trame superposés 15' à 18' situés respectivement aux niveaux N2', N4', N6' et N8' ;
- une cinquième colonne C5' de cinq fils de trame superposés 19' à 23' situés respectivement aux niveaux N1', N3', N5', N7' et N9' ;
- une sixième colonne C6' de quatre fils de trame superposés 24' à 27' situés respectivement aux niveaux N2', N4', N6' et N8' ;
- une septième colonne C7' de cinq fils de trame superposés 28' à 32' situés respectivement aux niveaux N1', N3', N5', N7' et N9' ;
- une huitième colonne C8' de quatre fils de trame superposés 33' à 36' situés respectivement aux niveaux N2', N4', N6' et N8' ;
- une neuvième colonne C9' de cinq fils de trame superposés 37' à 41' situés respectivement aux niveaux N1', N3', N5', N7' et N9' ; et
- une dixième colonne C10' de quatre fils de trame superposés 42' à 45' situés respectivement aux niveaux N2', N4', N6' et N8'.

Les colonnes impaires C1', C3', C'5, C7' et C9', formées de cinq fils de trame superposés, sont séparées les unes des autres par des intervalles constants selon la direction longitudinale, correspondant au pas P' toujours identique dans le même plan Pi mais différent d'un plan Pi à un autre plan voisin le long des plans P1' à P10' (on peut considérer que ce pas P' est évolutif dans le tissage).

Le même pas P' sépare les colonnes paires C2', C4', C6', C8' et C10' formées de quatre fils de trame superposés, qui s'intercalent entre les colonnes précédentes, ces quatre fils de trame étant disposés en quinconce avec les cinq fils de trame des deux colonnes impaires voisines.

Il est à noter que ce pas P' serait en fait égal au pas P de la première armure si les première et deuxième armures présentaient des rapports volumiques trame/chaîne identiques.

Ce motif de base de la deuxième armure se répète dans la direction longitudinale (direction des fils de chaîne), dans la direction transversale (direction des fils de trame), et dans la direction verticale (direction de l'épaisseur), en formant des nappes.

Les fils de trame 1' à 45' sont liés entre eux par quarante fils de chaîne 51' à 90' qui sont disposés dans dix plans parallèles P1' à P10' visibles respectivement sur les figures 10 à 19.

Les plans P1' à P10' se succèdent dans la direction transversale en étant régulièrement décalés entre eux d'un pas qui est compris entre 1,5 et 3 mm, en étant de préférence égal à 2,1mm.

Chacun de ces plans P1' à P10' contient quatre fils de chaîne parallèles, superposés, la disposition de chaque plan étant la suivante :

Dans le plan P1' (figure 10), un premier fil de chaîne 51' relie le fil de trame extrême supérieur 1' de la colonne C1' au fil de trame extrême supérieur 24' de la colonne C6' (en descendant), et il revient (en montant) sur le fil de trame extrême supérieur, correspondant au fil 1', dans le motif de base suivant. Un deuxième fil de chaîne 52' relie le fil de trame intermédiaire supérieur 2' de la colonne C1' au fil de trame intermédiaire supérieur 25' de la colonne C6' (en descendant), et il revient (en montant) sur le fil de trame intermédiaire supérieur, correspondant au fil 2', dans le motif de base suivant. Un troisième fil de chaîne 53' relie le fil de trame médian 3' de la colonne C1' au fil de trame intermédiaire inférieur 26' de la colonne C6' (en descendant), et il revient (en montant) sur le fil de trame médian, correspondant au fil 3', dans le motif de base suivant. Un quatrième fil de chaîne 54' relie le fil de trame intermédiaire inférieur 4' de la colonne C1' au fil de trame extrême inférieur 27' de la colonne C6' (en descendant), et il revient (en montant) sur le fil de trame intermédiaire inférieur, correspondant au fil 4', dans le motif de base suivant.

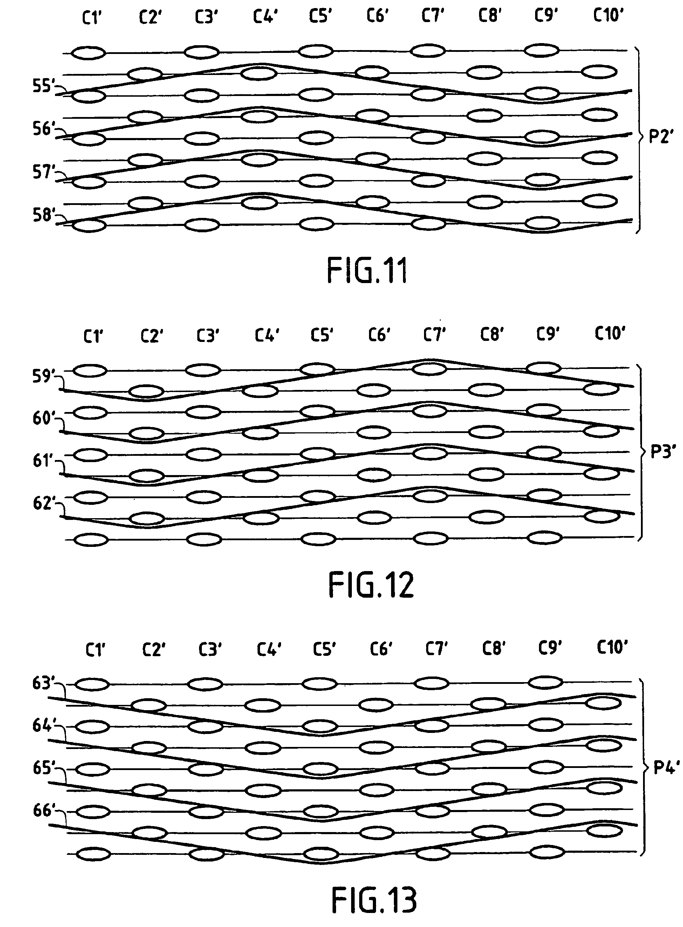

Dans le plan P2' (figure 11), un premier fil de chaîne 55' relie le fil de trame extrême supérieur 15' de la colonne C4' au fil de trame intermédiaire supérieur 38' de la colonne C9' (en descendant), et il revient (en montant) sur le fil de trame extrême supérieur, correspondant au fil 15', dans le motif de base suivant. Un deuxième fil de chaîne 56' relie le fil de trame intermédiaire supérieur 16' de la colonne C4' au fil de trame médian 39' de la colonne C9' (en descendant), et il revient (en montant) sur le fil de trame intermédiaire supérieur, correspondant au fil 16', dans le motif de base suivant. Un troisième fil de chaîne 57' relie le fil de trame intermédiaire inférieur 17' de la colonne C4' au fil de trame intermédiaire inférieur 40' de la colonne C9' (en descendant), et il revient (en montant) sur le fil de trame intermédiaire inférieur, correspondant au fil 17', dans le motif de base suivant. Un quatrième fil de chaîne 58' relie le fil de trame extrême inférieur 18' de la colonne C4' au fil de trame extrême inférieur 41' de la colonne C9' (en descendant), et il revient (en montant) sur le fil de trame extrême inférieur, correspondant au fil 18' dans le motif de base suivant.

Dans le plan P3' (figure 12), un premier fil de chaîne 59' relie le fil de trame extrême supérieur 28' de la colonne C7' au fil de trame extrême supérieur 6' de la colonne C2' (en descendant), dans le motif de base suivant, et il revient (en montant) sur le fil de trame extrême supérieur, correspondant au fil 28', dans le motif de base suivant. Un deuxième fil de chaîne 60' relie le fil de trame intermédiaire supérieur 29' de la colonne C7' au fil de trame intermédiaire supérieur 7' de la colonne C2' (en descendant), dans le motif de base suivant, et il revient (en montant) sur le fil de trame intermédiaire supérieur, correspondant au fil 29' dans le motif de base suivant. Un troisième fil de chaîne 61' relie le fil de trame médian 30' de la colonne C7' au fil de trame intermédiaire inférieur 8' de la colonne C2' (en descendant), dans le motif de base suivant, et il revient (en montant) sur le fil de trame médian, correspondant au fil 30', dans le motif de base suivant. Un quatrième fil de chaîne 62' relie le fil de trame intermédiaire inférieur 31' de la colonne C7' au fil de trame extrême inférieur 9' de la colonne C2' (en descendant), dans le motif de base suivant, et il revient (en montant) sur le fil de trame intermédiaire inférieur, correspondant au fil 31', dans le motif de base suivant.

Dans le plan P4' (figure 13), un premier fil de chaîne 63' relie le fil de trame extrême supérieur 42' de la colonne C10' au fil de trame intermédiaire supérieur 20' de la colonne C5' (en descendant), dans le motif de base suivant, et il revient (en montant) sur le fil de trame extrême supérieur, correspondant au fil 42', dans le motif de base suivant. Un deuxième fil de chaîne 64' relie le fil de trame intermédiaire supérieur 43' de la colonne C10' au fil de trame médian 21' de la colonne C5' (en descendant), dans le motif de base suivant, et il revient (en montant) sur le fil de trame intermédiaire supérieur, correspondant au fil 43', dans le motif de base suivant. Un troisième fil de chaîne 65' relie le fil de trame intermédiaire inférieur 44' de la colonne C10' au fil de trame intermédiaire inférieur 22' de la colonne C5' (en descendant), dans le motif de base suivant, et il revient (en montant) sur le fil de trame intermédiaire inférieur, correspondant au fil 44', dans le motif de base suivant. Un quatrième fil de chaîne 66' relie le fil de trame extrême inférieur 45' de la colonne C10' au fil de trame extrême inférieur 23' de la colonne C5' (en descendant), dans le motif de base suivant, et il revient (en montant) sur le fil de trame intermédiaire inférieur, correspondant au fil 45', dans le motif de base suivant.

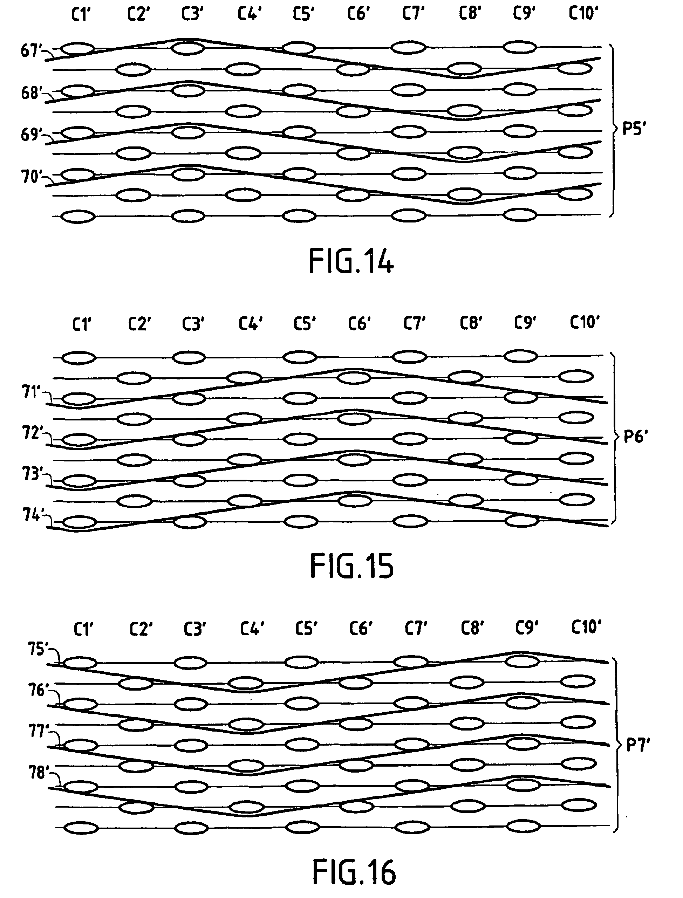

Dans le plan P5' (figure 14), un premier fil de chaîne 67' relie le fil de trame extrême supérieur 10' de la colonne C3' au fil de trame extrême supérieur 33' de la colonne C8' (en descendant), et il revient (en montant) sur le fil de trame extrême supérieur, correspondant au fil 10', dans le motif de base suivant. Un deuxième fil de chaîne 68' relie le fil de trame intermédiaire supérieur 11' de la colonne C3' au fil de trame intermédiaire supérieur 34' de la colonne C8' (en descendant), et il revient (en montant) sur le fil de trame intermédiaire supérieur, correspondant au fil 11', dans le motif de base suivant. Un troisième fil de chaîne 69' relie le fil de trame médian 12' de la colonne C3' au fil de trame intermédiaire inférieur 35' de la colonne C8' (en descendant), et il revient (en montant) sur le fil de trame médian, correspondant au fil 12', dans le motif de base suivant. Un quatrième fil de chaîne 70' relie le fil de trame intermédiaire inférieur 13' de la colonne C3' au fil de trame extrême inférieur 36' de la colonne C8' (en descendant), et il revient (en montant) sur le fil de trame intermédiaire inférieur, correspondant au fil 13', dans le motif de base suivant.

Dans le plan P6' (figure 15), un premier fil de chaîne 71' relie le fil de trame extrême supérieur 24' de la colonne C6' au fil de trame intermédiaire supérieur 2' de la colonne C1' (en descendant), dans le motif de base suivant, et il revient (en montant) sur le fil de trame extrême supérieur, correspondant au fil 24', dans le motif de base suivant. Un deuxième fil de chaîne 72' relie le fil de trame intermédiaire supérieur 25' de la colonne C6' au fil de trame médian 3' de la colonne C1' (en descendant), et il revient (en montant) sur le fil de trame intermédiaire supérieur, correspondant au fil 25', dans le motif de base suivant. Un troisième fil de chaîne 73' relie le fil de trame intermédiaire inférieur 26' de la colonne C6' au fil de trame intermédiaire inférieur 4' de la colonne C1' (en descendant), dans le motif de base suivant, et il revient (en montant) sur le fil de trame intermédiaire inférieur, correspondant au fil 26', dans le motif de base suivant. Un quatrième fil de chaîne 74' relie le fil de trame extrême inférieur 27' de la colonne C6' au fil de trame extrême inférieur 5' de la colonne C1' (en descendant), dans le motif de base suivant, et il revient (en montant) sur le fil de trame extrême inférieur, correspondant au fil 27', dans le motif de base suivant.

Dans le plan P7' (figure 16), un premier fil de chaîne 75' relie le fil de trame extrême supérieur 37' de la colonne C9' au fil de trame extrême supérieur 15' de la colonne C4' (en descendant), dans le motif de base suivant, et il revient (en montant) sur le fil de trame extrême supérieur, correspondant au fil 37', dans le motif de base suivant. Un deuxième fil de chaîne 76' relie le fil de trame intermédiaire supérieur 38' de la colonne C9' au fil de trame intermédiaire supérieur 16' de la colonne C4' (en descendant), dans le motif de base suivant, et il revient (en montant) sur le fil de trame intermédiaire supérieur, correspondant au fil 38' dans le motif de base suivant. Un troisième fil de chaîne 77' relie le fil de trame médian 39' de la colonne C9' au fil de trame intermédiaire inférieur 17' de la colonne C4' (en descendant), dans le motif de base suivant, et il revient (en montant) sur le fil de trame médian, correspondant au fil 39', dans le motif de base suivant. Un quatrième fil de chaîne 78' relie le fil de trame intermédiaire inférieur 40' de la colonne C9' au fil de trame extrême inférieur 18' de la colonne C4' (en descendant), dans le motif de base suivant, et il revient (en montant) sur le fil de trame intermédiaire inférieur, correspondant au fil 40', dans le motif de base suivant.

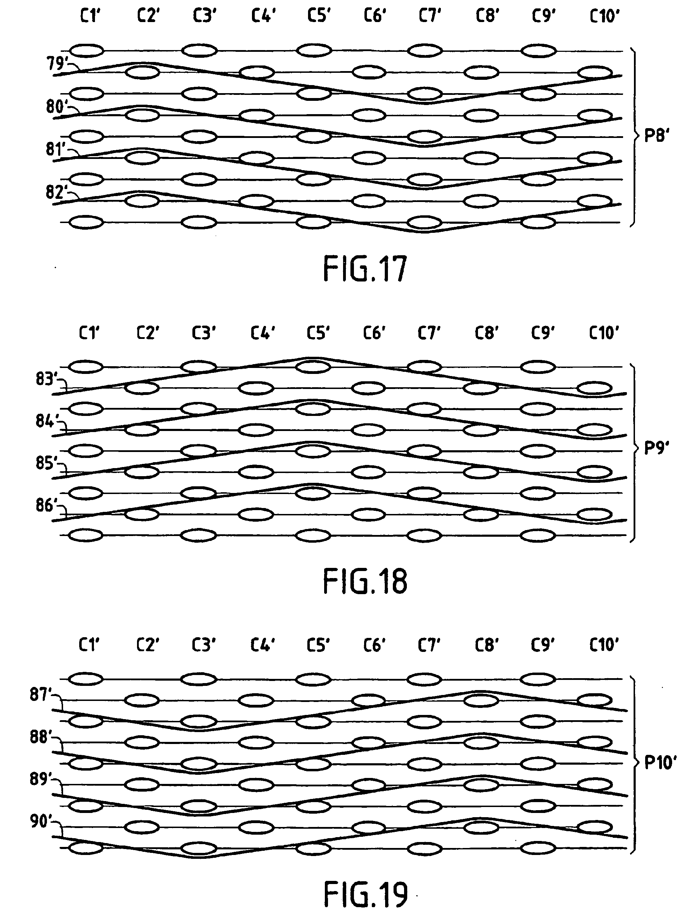

Dans le plan P8' (figure 17), un premier fil de chaîne 79' relie le fil de trame extrême supérieur 6' de la colonne C2' au fil de trame intermédiaire supérieur 29' de la colonne C7' (en descendant), et il revient (en montant) sur le fil de trame extrême supérieur, correspondant au fil 6', dans le motif de base suivant. Un deuxième fil de chaîne 80' relie le fil de trame intermédiaire supérieur 7' de la colonne C2' au fil de trame médian 30' de la colonne C7' (en descendant), et il revient (en montant) sur le fil de trame intermédiaire supérieur, correspondant au fil 7', dans le motif de base suivant. Un troisième fil de chaîne 81' relie le fil de trame intermédiaire inférieur 8' de la colonne C2' au fil de trame intermédiaire inférieur 31' de la colonne C7' (en descendant), et il revient (en montant) sur le fil de trame intermédiaire inférieur, correspondant au fil 8', dans le motif de base suivant. Un quatrième fil de chaîne 82' relie le fil de trame extrême inférieur 9' de la colonne C2' au fil de trame extrême inférieur 32' de la colonne C7' (en descendant), et il revient (en montant) sur le fil de trame extrême inférieur, correspondant au fil 9', dans le motif de base suivant.

Dans le plan P9' (figure 18), un premier fil de chaîne 83' relie le fil de trame extrême supérieur 19' de la colonne C5' au fil de trame extrême supérieur 42' de la colonne C10' (en descendant), et il revient (en montant) sur le fil de trame extrême supérieur, correspondant au fil 19', dans le motif de base suivant. Un deuxième fil de chaîne 84' relie le fil de trame intermédiaire supérieur 20' de la colonne C5' au fil de trame intermédiaire supérieur 43' de la colonne C10' (en descendant), et il revient (en montant) sur le fil de trame intermédiaire supérieur, correspondant au fil 20', dans le motif de base suivant. Un troisième fil de chaîne 85' relie le fil de trame médian 21' de la colonne C5' au fil de trame intermédiaire inférieur 44' de la colonne C10' (en descendant), et il revient (en montant) sur le fil de trame médian, correspondant au fil 21', dans le motif de base suivant. Un quatrième fil de chaîne 86' relie le fil de trame intermédiaire inférieur 22' de la colonne C5' au fil de trame extrême inférieur 45' de la colonne C10' (en descendant), et il revient (en montant) sur le fil de trame intermédiaire inférieur, correspondant au fil 22', dans le motif de base suivant.

Enfin, dans le plan P10' (figure 19), un premier fil de chaîne 87' relie le fil de trame extrême supérieur 33' de la colonne C8' au fil de trame intermédiaire supérieur 11' de la colonne C3' (en descendant), dans le motif de base suivant, et il revient (en montant) sur le fil de trame extrême supérieur, correspondant au fil 33', dans le motif de base suivant. Un deuxième fil de chaîne 88' relie le fil de trame intermédiaire supérieur 34' de la colonne C8' au fil de trame médian 12' de la colonne C3' (en descendant), et il revient (en montant) sur le fil de trame intermédiaire supérieur, correspondant au fil 34', dans le motif de base suivant. Un troisième fil de chaîne 89' relie le fil de trame intermédiaire inférieur 35' de la colonne C8' au fil de trame intermédiaire inférieur 13' de la colonne C3' (en descendant), dans le motif de base suivant, et il revient (en montant) sur le fil de trame intermédiaire inférieur, correspondant au fil 35', dans le motif de base suivant. Un quatrième fil de chaîne 90' relie le fil de trame extrême inférieur 36' de la colonne C8' au fil de trame extrême inférieur 14' de la colonne C3' (en descendant), dans le motif de base suivant, et il revient (en montant) sur le fil de trame extrême inférieur, correspondant au fil 36', dans le motif de base suivant.

Il ressort de ces figures 10 à 19, que l'angle de liaison α' (ou angle d'embuvage) des fils de chaîne est plus faible dans la deuxième armure que l'angle de liaison α de la première armure (figures 2 à 9). A cet égard, il convient de noter que les figures n'étant pas, pour des raisons de clarté, à l'échelle, les angles α et α' visibles sur les figures 2 à 19 ne correspondent pas aux valeurs réelles.

On remarque que pour la deuxième armure, en passant d'un plan à un autre plan, voisin, on retrouve la même configuration à quatre fils de chaîne parallèles, décalée de manière régulière dans la direction transversale de 1,5 fois la valeur du pas P'. Bien évidemment, là encore, le motif de base de la deuxième armure défini sur dix plans peut se répéter indéfiniment, dans la direction longitudinal, dans la direction transversale et dans la direction verticale (les fils de trame 1' à 45' formant des nappes).

Ainsi, on obtient une deuxième armure (B) qui présente un motif de base comprenant exactement quarante-cinq fils de trame (1' à 45') disposés en quinconce en alternant des colonnes (C2', C4', C6', C8', C10') d'exactement quatre fils de trame superposés dans une direction verticale, séparées dans la direction longitudinale par un pas (P'), et des colonnes (C1', C3', C5', C7', C9') d'exactement cinq fils de trame superposés, séparées entre elles selon la direction longitudinale par le même pas (P'). Les fils de trame (1' à 45') sont répartis en exactement dix colonnes (C1' à C10') s'étendant dans une direction verticale, les fils de trame (1' à 45') étant ainsi disposés sur exactement neuf niveaux (N1' à N9'). Le motif de base de la deuxième armure comporte également exactement quarante fils de chaîne (51' à 90') disposés sur exactement dix plans verticaux parallèles (P1' à P10') entre eux en direction transversale, chaque plan contenant exactement quatre fils de chaîne parallèles superposés, avec une alternance de plans d'un premier type (P1', P3', P5', P7', P9') et de plans d'un deuxième type (P2', P4', P6', P8', P10').

Lesdits plans d'un premier type (P1', P3', P5', P7', P9') présentent :
- un premier fil de chaîne (51', 59', 67', 75', 83') reliant un fil de trame extrême supérieur (1', 28', 10', 37', 19') d'une colonne (C1', C7', C3', C9', C5') d'exactement cinq fils de trame au fil de trame extrême supérieur (24', 6', 33', 15', 42') d'une colonne (C6', C2', C8', C4', C10') d'exactement quatre fils de trame espacée de la colonne précédente par exactement deux pas et demi (P'), et revenant sur un fil de trame extrême supérieur (1', 28', 10', 37', 19') d'une colonne (C1', C7', C3', C9', C5') d'exactement cinq fils de trame, espacée de la première colonne par exactement cinq pas (P'),
- un deuxième fil de chaîne (52', 60', 68', 76', 84') reliant un fil de trame intermédiaire supérieur (2', 29', 11', 38', 20') d'une colonne (C1, C7', C3', C9', C5') d'exactement cinq fils de trame au fil de trame intermédiaire supérieur (25', 7', 34', 16', 43') d'une colonne (C6', C2', C8', C4', C10') d' exactement quatre fils de trame espacée de la colonne précédente par exactement deux pas et demi (P'), et revenant sur un fil de trame intermédiaire supérieur (2', 29', 11', 38', 20') d'une colonne (C1', C7', C3', C9', C5') d'exactement cinq fils de trame, espacée de la première colonne par exactement cinq pas (P'),
- un troisième fil de chaîne (53', 61', 69', 77', 85') reliant un fil de trame médian (3', 30', 12', 39', 21') d'une colonne (C1', C7', C3', C9', C5') d'exactement cinq fils de trame au fil de trame intermédiaire inférieur (26', 8', 35', 17', 44') d'une colonne (C6', C2', C8', C4', C10') d'exactement quatre fils de trame espacée de la colonne précédente par exactement deux pas et demi (P'), et revenant sur un fil de trame médian (3', 30', 12', 39', 21') d'une colonne (C1', C7', C3', C9', C5') d'exactement cinq fils de trame, espacée de la première colonne par exactement cinq pas (P'),
- un quatrième fil de chaîne (54', 62', 70', 78', 86') reliant un fil de trame intermédiaire inférieur (4', 31', 13', 40', 22') d'une colonne (C1', C7', C3', C9', C5') d'exactement cinq fils de trame au fil de trame extrême inférieur (27', 9', 36', 18', 45') d'une colonne (C6', C2', C8', C4', C10') d'exactement quatre fils de trame espacée de la colonne précédente par exactement deux pas et demi (P'), et revenant sur un fil de trame intermédiaire inférieur(4', 31', 13', 40', 22') d'une colonne (C1', C7', C3', C9', C5') d' exactement cinq fils de trame, espacée de la première colonne par exactement cinq pas (P').

Lesdits plans d'un deuxième type (P2', P4', P6', P8', P10') présentent :
- un premier fil de chaîne (55', 63', 71', 79', 87') reliant un fil de trame extrême supérieur (15', 42', 24', 6', 33') d'une colonne (C4', C10', C6', C2', C8') d'exactement quatre fils de trame au fil de trame intermédiaire supérieur (38', 20', 2', 29', 11') d'une colonne (C9', C5', C1', C7, C3') d'exactement cinq fils de trame espacée de la colonne précédente par exactement deux pas et demi (P'), et revenant sur un fil de trame extrême supérieur (15', 42', 24', 6', 33') d'une colonne (C4', C10', C6', C2', C8') d'exactement quatre fils de trame, espacée de la première colonne par exactement cinq pas (P'),
- un deuxième fil de chaîne (56', 64', 72', 80', 88') reliant un fil de trame intermédiaire supérieur (16', 43', 25', 7', 34') d'une colonne (C4', C10', C6', C2', C8') d'exactement quatre fils de trame au fil de trame médian (39', 21', 3', 30', 12') d'une colonne (C9', C5', C1', C7, C3') d'exactement cinq fils de trame espacée de la colonne précédente par exactement deux pas et demi (P'), et revenant sur un fil de trame intermédiaire supérieur (16', 43', 25', 7', 34') d'une colonne (C4', C10', C6', C2', C8') d exactement quatre fils de trame, espacée de la première colonne par exactement cinq pas (P'),
- un troisième fil de chaîne (57', 65', 73', 81', 89') reliant un fil de trame intermédiaire inférieur (17', 44', 26', 8', 35') d'une colonne (C4', C10', C6', C2', C8') d'exactement quatre fils de trame au fil de trame intermédiaire inférieur (40', 22', 4', 31', 13') d'une colonne (C9', C5', C1, C7, C3') d'exactement cinq fils de trame espacée de la colonne précédente par exactement deux pas et demi (P'), et revenant sur un fil de trame intermédiaire inférieur (17', 44', 26', 8', 35') d'une colonne (C4', C10', C6', C2', C8') d'exactement quatre fils de trame, espacée de la première colonne par exactement cinq pas (P'),
- un quatrième fil de chaîne (58', 66', 74', 82', 90') reliant un fil de trame extrême inférieur (18', 45', 27', 9', 36') d'une colonne (C4', C10', C6', C2', C8') d'exactement quatre fils de trame au fil de trame extrême inférieur 41' (41', 23', 5', 32', 14') d'une colonne (C9', C5', C1', C7, C3') d'exactement cinq fils de trame espacée de la colonne précédente par exactement deux pas et demi (P'), et revenant sur un fil de trame extrême inférieur(18', 45', 27', 9', 36') d'une colonne (C4', C10', C6', C2', C8') d'exactement quatre fils de trame, espacée de la première colonne par exactement cinq pas (P').

Ainsi, on comprend que dans le motif de base de cette deuxième armure, les groupes parallèles de quatre fils de chaîne (51', 52', 53', 54' ; 55', 56', 57' ,58' ;59' ,60', 61' ,62' ; 63', 64', 65', 66' ; 67' , 68', 69', 70' ; 71', 72', 73' ,74' ; 75, 76, 77', 78' ; 79', 80', 81', 82' ; 83', 84', 85', 86' ; 87', 88', 89', 90') sont décalées longitudinalement de 1,5 P' d'un plan au plan voisin, c'est-à-dire entre un plan du premier type (P1', P3', P5', P7', P9') et le plan du deuxième type (P2', P4', P6', P8', P10') qui est son voisin.

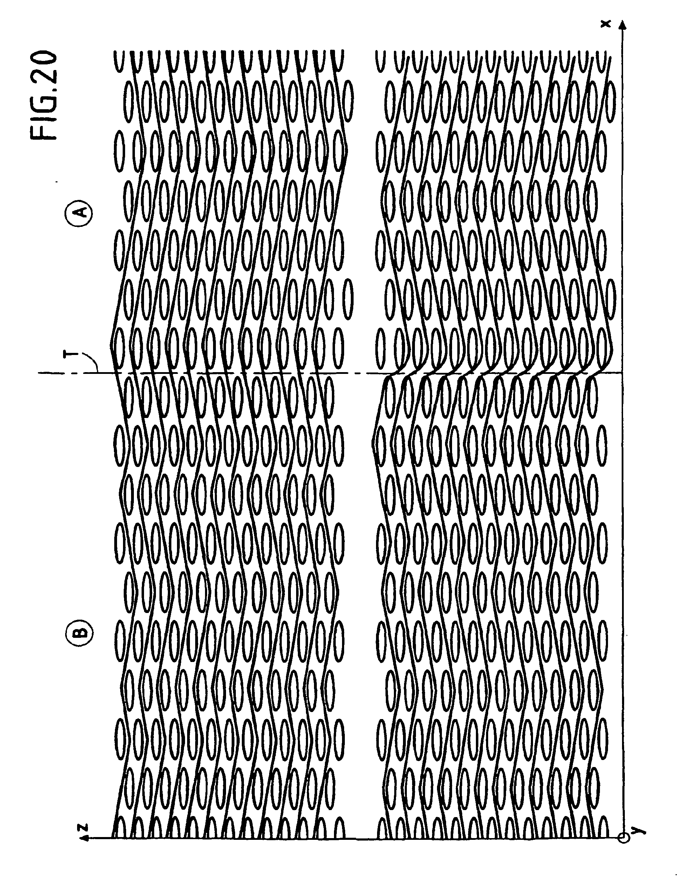

Entre la première armure et la deuxième armure, est créée une zone de transition qui va maintenant être décrite en relation avec les figures 20 à 22.

Sur la figure 20, cette zone de transition est montrée en coupe selon les directions longitudinale et verticale, depuis la deuxième armure B à gauche, vers la première armure A à droite, autour d'un plan vertical et transversal de transition T indiqué en traits mixtes, la partie haute de la figure montrant la situation pour les plans P1' (à gauche) et P1 (à droite) et la partie basse de la figure montrant la situation pour les plans P7' (à gauche) et P2 (à droite).

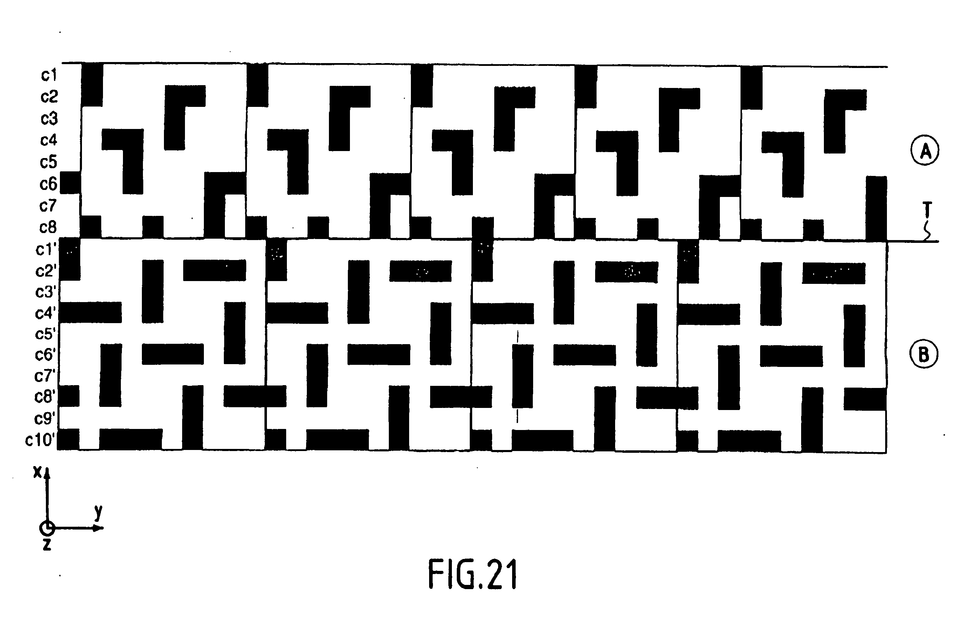

Sur la figure 21, cette zone de transition est montrée symboliquement depuis le dessus de la préforme, depuis la deuxième armure B en bas, vers la première armure A en haut, de part et d'autre du plan vertical de transition T indiqué par une ligne. Les parties noires représentent les fils de chaîne visibles et les parties blanches représentent les fils de trame visibles.

Sur cette figure 21, on voit très exactement, dans le bas, quatre motifs de base de la deuxième armure (40 fils de chaîne formant quatre séries alignées de colonnes C1' à C10'), et dans le haut cinq motifs de base de la première armure (40 fils de chaîne formant cinq séries alignées de colonnes C1 à C8).

La préforme ainsi obtenue forme un ensemble multicouche lié, qui peut s'étendre selon la direction longitudinale de façon infinie dans son plan, par répétition de la même série de motifs de base (en l'occurrence une première série pour la première armure puis une deuxième série pour la deuxième armure).

Plus précisément, la longueur des fils de chaîne et des fils de trame va conditionner le maximum de longueur possible pour la préforme. Il est entendu que si ces longueurs le permettent, plusieurs préformes peuvent être tissées bout à bout dans la direction longitudinale, par formation successive d'une première partie réalisée dans la première armure, d'une zone de transition, d'une deuxième partie réalisée dans la deuxième armure, puis d'une zone de transition inversée et à nouveau une série formée d'une première partie, d'une zone de transition et d'une deuxième partie, etc.....

Bien entendu, l'ordre de tissage des première et deuxième parties peut être inversé : tissage de plusieurs préformes à la suite dans la direction longitudinale, par formation successive d'une deuxième partie réalisée dans la deuxième armure, d'une zone de transition, d'une première partie réalisée dans la première armure, puis d'une zone de transition inversée et à nouveau une série formée d'une deuxième partie, d'une zone de transition et d'une première partie, etc.....

A ce stade, il faut noter que tous les fils de chaîne et tous les fils de trame sont référencés lors de la réalisation du tissage en continu, de sorte qu'un défaut, ou même la rupture, de l'un d'entre eux est repéré(e) et réparé(e) in situ et en temps réel. Ceci permet de connaître la nature et la position de ce défaut qui seront enregistrées, ce qui permet la traçabilité des défauts générés lors du tissage en relation avec la pièce obtenue à partir de la préforme.

En pratique, le tissage est entièrement automatique, par programmation du métier à tisser de la figure 1.

Ainsi, lors de la fabrication d'une préforme pour une aube de soufflante, on prévoit donc que la première armure A correspond au corps de l'aube et que la deuxième armure B correspond au pied de l'aube, l'échasse se terminant dans la zone de transition.

Il faut noter que la plus faible épaisseur du corps de l'aube par rapport au pied de l'aube est obtenue pendant le tissage de la zone de transition, essentiellement par le changement d'armure entre la deuxième partie (deuxième armure B correspondant au pied de l'aube) et la première partie (première armure A correspondant au corps de l'aube). En effet, ce changement d'armure de tissage permet un changement de rapport volumique chaîne/trame entre la deuxième partie (deuxième armure B correspondant au pied de l'aube) et la première partie (première armure A correspondant au corps de l'aube) qui passe de 40/60% à 70/30%.

Egalement, on retire du tissage au fur et à mesure une partie des fils de chaîne, lorsque que la zone de transition est complètement réalisée, au niveau de la première armure A correspondant au corps de l'aube.

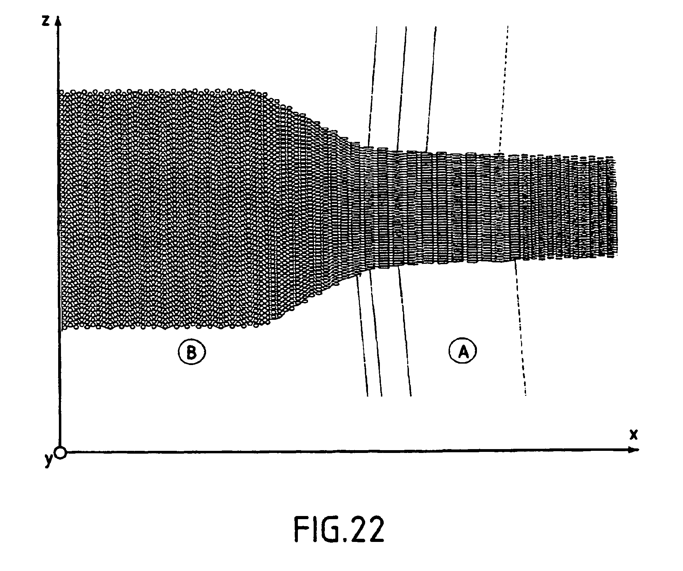

Ceci est illustré sur la figure 22 qui montre de manière schématique en coupe selon les directions longitudinale et verticale, montée sur le métier à tisser de type Jacquard, une portion d'une aube : à gauche le pied (partie B) et à droite la pale (partie A). Les fils de trame sont vus en coupe, seule leur section étant illustrée, tandis que les fils de chaîne sont visibles selon leur longueur de gauche à droite.

Ainsi, certains des fils de chaîne situés dans la partie haute et dans la partie basse sont retirés du tissage de la préforme destinée à former l'aube, au niveau de la première armure A correspondant au corps de l'aube, en étant écartés respectivement vers le haut et vers le bas sur des parties annexes du métier à tisser.

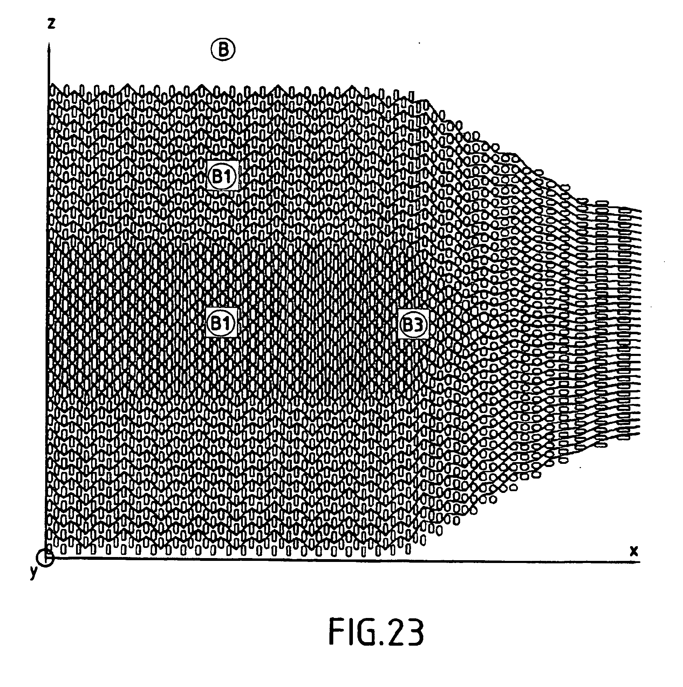

On se reporte maintenant à la figure 23 présentant une variante de réalisation. Ici, comme dans le cas de la préforme illustrée sur les figures 2 à 22, les fils de chaîne (qui s'étendent de gauche à droite) sont des fibres de carbone présentant un titre de 48000 filaments (environ 1800 tex), et que l'on qualifie par la suite de fils de taille normale.

De façon plus précise, (précision non représentée), afin d'améliorer encore la tenue à l'impact de l'aube en surface, on prévoit d'utiliser des fils de chaîne plus fins sur tout le contour de la préforme, c'est-à-dire sur sa surface : ce sont des fils de chaîne fins présentant un titre de 24000 filaments (environ 900 tex). On prévoit également une sous-couche de transition entre la surface et la partie interne de la préforme qui contient à la fois des fils de chaîne de taille normale et des fils de chaîne fins.

De manière plus particulière, la variante de la préforme visible sur la figure 23 comporte une deuxième partie B, destinée à former le pied de l'aube, qui se décompose en :
- une zone de coeur du pied de l'aube (zone B1 sur la figure 23) formée avec des gros fils de trame présentant jusqu'à un titre de 72000 filaments (environ 2700 tex) ou même jusqu'à un titre de 96000 filaments (environ 3600 tex),
- une zone B2 qui entoure radialement la zone B1 de coeur du pied de l'aube et qui est formée avec des fils de trame de taille normale présentant un titre de 48000 filaments (environ 1800 tex) et
- une zone B3 qui prolonge en direction longitudinale la zone B1 de coeur du pied de l'aube en direction de la première armure A correspondant au corps de l'aube, et dont l'épaisseur (direction z) et la largeur (direction y) vont en diminuant : cette zone B3 de transition est formée à la fois avec des fils de trame de taille normale présentant un titre de 48000 filaments (environ 1800 tex) et avec des fils de trame gros présentant un titre jusqu'à 96000 filaments (environ 3600 tex).

Cette variante selon la figure 23 permet de rigidifier encore davantage le pied de l'aube issu de la deuxième armure B, en particulier dans la zone B1 de coeur.

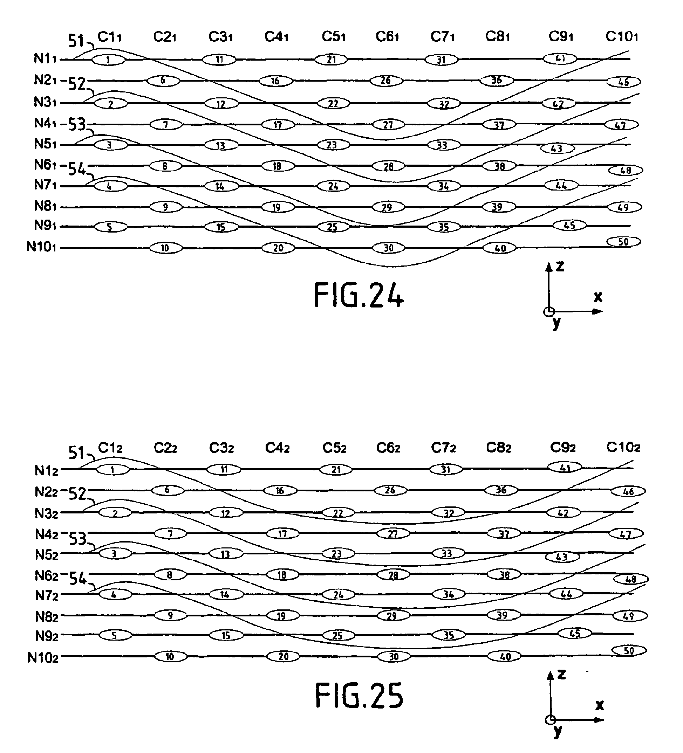

On se reporte maintenant à la figure 24 qui illustre schématiquement, en coupe selon les directions longitudinale et verticale, les fils de trame contenus dans un premier plan d'une première variante de réalisation de la première armure. Cette première armure comprend cinquante fils de trame 1 à 50 (c'est leur section qui est visible), disposés en quinconce sur dix niveaux superposés N1₁ à N10₁, et répartis en dix colonnes C1₁ à C10₁, selon :
- une première colonne C1₁ de cinq fils de trame superposés 1 à 5 situés respectivement aux niveaux N1₁, N3₁, N5₁, N7₁ et N9₁ ;
- une deuxième colonne C2₁ de cinq fils de trame superposés 6 à 10 situés respectivement aux niveaux N2₁, N4₁, N6₁, N8₁, et N10₁ ;
- une troisième colonne C3₁ de cinq fils de trame superposés 11 à 15 situés respectivement aux niveaux N1₁, N3₁, N5₁, N7₁ et N9₁ ;
- une quatrième colonne C4₁ de cinq fils de trame superposés 16 à 20 situés respectivement aux niveaux N2₁, N4₁, N6₁, N8₁, et N10₁ ;
- une cinquième colonne C5₁ de cinq fils de trame superposés 21 à 25 situés respectivement aux niveaux N1₁, N3₁, N5₁, N7₁ et N9₁ ;
- une sixième colonne C6₁ de cinq fils de trame superposés 26 à 30 situés respectivement aux niveaux N2₁, N4₁, N6₁, N8₁, et N10₁ ;
- une septième colonne C7₁ de cinq fils de trame superposés 31 à 35 situés respectivement aux niveaux N1₁, N3₁, N5₁, N7₁ et N9₁ ;
- une huitième colonne C8₁ de cinq fils de trame superposés 36 à 40 situés respectivement aux niveaux N2₁, N4₁, N6₁, N8₁, et N10₁ ;
- une neuvième colonne C9₁ de cinq fils de trame superposés 41 à 45 situés respectivement aux niveaux N1₁, N3₁, N5₁, N7₁ et N9₁ ; et
- une dixième colonne C10₁ de cinq fils de trame superposés 46 à 50 situés respectivement aux niveaux N2₁, N4₁, N6₁, N8₁, et N10₁.

Les fils de trame 1 à 50 sont liés entre eux par 35 fils de chaîne qui sont disposés dans 10 plans parallèles qui se succèdent dans la direction transversale en étant régulièrement décalés entre eux du pas toujours identique et qui est compris entre 1,5 et 3 mm, en étant de préférence égal à 2,1mm.

Chacun de ces plans contient quatre ou trois fils de chaîne parallèles, superposés, la disposition du premier plan, illustré sur la figure 24, étant la suivante :

Un premier fil de chaîne 51 relie le fil de trame extrême supérieur 1 de la colonne C1₁ au fil de trame intermédiaire supérieur 27 de la colonne C6₁ (en descendant), et il revient (en montant) sur le fil de trame extrême supérieur, correspondant au fil 1, dans le motif de base suivant. Un deuxième fil de chaîne 52 relie le fil de trame intermédiaire supérieur 2 de la colonne C1₁ au fil de trame médian 28 de la colonne C6₁ (en descendant), et il revient (en montant) sur le fil de trame intermédiaire supérieur, correspondant au fil 2, dans le motif de base suivant. Un troisième fil de chaîne 53 relie le fil de trame médian 3 de la colonne C1₁ au fil de trame intermédiaire inférieur 29 de la colonne C6₁ (en descendant), et il revient (en montant) sur le fil de trame médian, correspondant au fil 3, dans le motif de base suivant. Un quatrième fil de chaîne 54 relie le fil de trame intermédiaire inférieur 4 de la colonne C1₁ au fil de trame extrême inférieur 30 de la colonne C6₁ (en descendant), et il revient (en montant) sur le fil de trame intermédiaire inférieur, correspondant au fil 4, dans le motif de base suivant.

La figure 25 illustre schématiquement, en coupe selon les directions longitudinale et verticale, les fils de trame contenus dans un premier plan d'une deuxième variante de réalisation de la première armure.

Cette première armure comprend cinquante fils de trame 1 à 50 (c'est leur section qui est visible), disposés en quinconce sur dix niveaux superposés N1₂ à N10₂, et répartis en dix colonnes C1₂ à C10₂ selon la même disposition que dans le cas de la première variante de la figure 24.

Les fils de trame 1 à 50 sont liés entre eux par 40 fils de chaîne qui sont disposés dans 10 plans parallèles qui se succèdent dans la direction transversale en étant régulièrement décalés entre eux du pas toujours identique et qui est compris entre 1,5 et 3 mm, en étant de préférence égal à 2,1mm.

Chacun de ces plans contient quatre fils de chaîne parallèles, superposés, la disposition du premier plan, illustré sur la figure 25, étant la suivante :

Un premier fil de chaîne 51 relie le fil de trame extrême supérieur 1 de la colonne C1₂ aux fils de trame intermédiaires supérieurs 22 et 32 des colonnes C5₂ et C7₂ (en descendant), et il revient (en montant) sur le fil de trame extrême supérieur, correspondant au fil 1, dans le motif de base suivant. Un deuxième fil de chaîne 52 relie le fil de trame intermédiaire supérieur 2 de la colonne C1₂ aux fils de trame médians 23 et 33 des colonnes C5₂ et C7₂ (en descendant), et il revient (en montant) sur le fil de trame intermédiaire supérieur, correspondant au fil 2, dans le motif de base suivant. Un troisième fil de chaîne 53 relie le fil de trame médian 3 de la colonne C1₂ aux fils de trame intermédiaires inférieurs 24 et 34 des colonnes C5₂ et C7₂ (en descendant), et il revient (en montant) sur le fil de trame médian, correspondant au fil 3, dans le motif de base suivant. Un quatrième fil de chaîne 54 relie le fil de trame intermédiaire inférieur 4 de la colonne C1₂ aux fils de trame extrêmes inférieurs 25 et 35 des colonnes C5₂ et C7₂ (en descendant), et il revient (en montant) sur le fil de trame intermédiaire inférieur, correspondant au fil 4, dans le motif de base suivant.

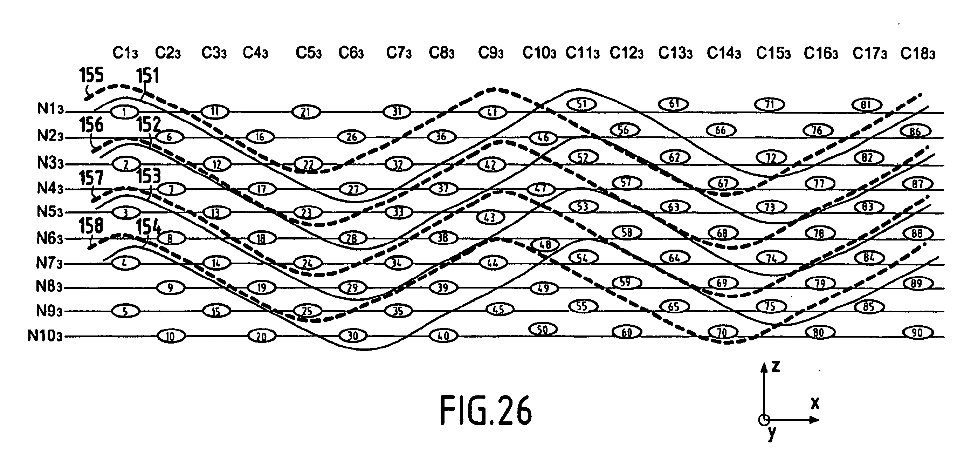

La figure 26 représente schématiquement, en coupe selon les directions longitudinale et verticale, les fils de trame contenus dans un premier plan et dans un deuxième plan d'une troisième variante de réalisation de la première armure.

Cette première armure comprend quatre-vint dix fils de trame 1 à 90 (c'est leur section qui est visible), disposés en quinconce sur dix niveaux superposés N1₃ à N10₃, et répartis en dix-huit colonnes C1₃ à C18₃ selon la même disposition que dans le cas de la première variante de la figure 24.

Les fils de trame 1 à 90 sont liés entre eux par 63 fils de chaîne qui sont disposés dans 18 plans parallèles qui se succèdent dans la direction transversale en étant régulièrement décalés entre eux du pas toujours identique et qui est compris entre 1,5 et 3 mm, en étant de préférence égal à 2,1mm.

Chacun de ces plans contient quatre ou trois fils de chaîne parallèles, superposés, la disposition des premier et deuxième plans visibles sur la figure 26 étant la suivante :

Dans le premier plan (fils de chaîne en traits pleins), un premier fil de chaîne 151 relie le fil de trame extrême supérieur 1 de la colonne C1₃ au fil de trame intermédiaire supérieur 27 de la colonne C6₃ (en descendant), il revient (en montant) sur le fil de trame extrême supérieur 51 de la colonne C11₃, il revient (en descendant) sur le fil de trame extrême supérieur 72 de la colonne C15₃ , et il revient (en montant) sur le fil de trame extrême supérieur correspondant au fil 1, dans le motif de base suivant. Un deuxième fil de chaîne 152 relie le fil de trame intermédiaire supérieur 2 de la colonne C1₃ au fil de trame médian 28 de la colonne C6₃ (en descendant), il revient (en montant) sur le fil de trame intermédiaire supérieur 52 de la colonne C11₃, il revient (en descendant) sur le fil de trame médian 73 de la colonne C15₃, et il revient (en montant) sur le fil de trame intermédiaire supérieur, correspondant au fil 2, dans le motif de base suivant. Un troisième fil de chaîne 153 relie le fil de trame médian 3 de la colonne C1₃ au fil de trame intermédiaire inférieur 29 de la colonne C6₃ (en descendant), il revient (en montant) sur le fil de trame médian 53 de la colonne C11₃, il revient (en descendant) sur le fil de trame intermédiaire inférieur 74 de la colonne C15₃ et il revient (en montant) sur le fil de trame médian, correspondant au fil 3, dans le motif de base suivant. Un quatrième fil de chaîne 154 relie le fil de trame intermédiaire inférieur 4 de la colonne C1₃ au fil de trame extrême inférieur 30 de la colonne C6₃ (en descendant), il revient (en montant) sur le fil de trame intermédiaire inférieur 54 de la colonne C11₃, il revient (en descendant) sur le fil de trame extrême inférieur 75 de la colonne C15₃, et il revient (en montant) sur le fil de trame intermédiaire inférieur, correspondant au fil 4, dans le motif de base suivant.

Dans le deuxième plan (fils de chaîne en traits pointillés sur la figure 26), un premier fil de chaîne 155 relie le fil de trame extrême supérieur 1 de la colonne C1₃ au fil de trame intermédiaire supérieur 22 de la colonne C5₃ (en descendant), il revient (en montant) sur le fil de trame extrême supérieur 41 de la colonne C9₃, il revient (en descendant) sur le fil de trame intermédiaire supérieur 67 de la colonne C14₃, et il revient (en montant) sur le fil de trame extrême supérieur, correspondant au fil 1, dans le motif de base suivant. Un deuxième fil de chaîne 156 relie le fil de trame intermédiaire supérieur 2 de la colonne C1₃ au fil de trame médian 23 de la colonne C5₃ (en descendant), il revient (en montant) sur le fil de trame intermédiaire supérieur 42 de la colonne C9₃, il revient (en descendant) sur le fil de trame médian 68 de la colonne C14₃, et il revient (en montant) sur le fil de trame intermédiaire supérieur, correspondant au fil 2, dans le motif de base suivant. Un troisième fil de chaîne 157 relie le fil de trame médian 3 de la colonne C1₃ au fil de trame intermédiaire inférieur 24 de la colonne C5₃ (en descendant), il revient (en montant) sur le fil de trame médian 43 de la colonne C9₃, il revient (en descendant) sur le fil de trame intermédiaire inférieur 69 de la colonne C14₃, et il revient (en montant) sur le fil de trame médian, correspondant au fil 3, dans le motif de base suivant. Un quatrième fil de chaîne 158 relie le fil de trame intermédiaire inférieur 4 de la colonne C1₃ au fil de trame extrême inférieur 25 de la colonne C5 (en descendant), il revient (en montant) sur le fil de trame intermédiaire inférieur 44 de la colonne C9₃, il revient (en descendant) sur le fil de trame extrême inférieur 70 de la colonne C14₃, et il revient (en montant) sur le fil de trame intermédiaire inférieur, correspondant au fil 4, dans le motif de base suivant.

D'une manière générale, on peut choisir des fils, en particulier des fils de carbone, ayant un titre compris entre 6000 filaments (225 tex) et 96000 filaments (3600 tex).

Egalement, la présente invention n'est pas limitée aux armures décrites précédemment, l'angle d'embuvage des fils de chaîne étant maintenu à une valeur faible, de préférence entre 2 et 10°, et le pas en trame variant de 0,2 à 5 mm.

Il faut aussi noter (cas de figure non représenté) qu'il est possible de faire varier le titre des fils de chaîne en surface, entre le bord de fuite et le bord d'attaque, les fils de chaînes étant alors plus fins du côté du bord d'attaque afin d'améliorer la cohésion, et donc la résistance mécanique à cet endroit tout particulièrement soumis à de fortes contraintes lors du fonctionnement.

Selon l'invention, on réalise une aube de soufflante pour turbo-réacteur avec au moins une première partie et au moins une deuxième partie s'étendant successivement dans la direction longitudinale avec des dimensions et/ou des propriétés mécaniques différentes selon le procédé de fabrication qui suit.

On réalise d'abord par tissage en trois dimensions une préforme telle qu'elle a été décrite précédemment.

Ensuite on découpe cette préforme, par exemple par découpe au laser ou au jet d'eau, selon la forme et les dimensions de la première partie et de la deuxième partie de l'aube.

Du fait de la souplesse de la préforme tissée, celle-ci va s'adapter à la forme du moule et il est donc possible d'effectuer seulement une découpe du contour de la préforme selon un tracé vertical.

L'étape suivante consiste à placer cette préforme découpée dans un moule pouvant être fermé de manière étanche avec un logement ayant la forme et les dimensions de la pièce finale moulée. Il est entendu qu'au cours de cette étape, la préforme peut être mise en torsion, selon la forme définitive de l'aube, et donc du moule.

Ensuite, on referme le moule, on injecte le liant comprenant une résine thermodurcissable dans tout le logement pour imprégner toute la préforme découpée. Enfin, on chauffe le moule pour polymériser la résine et durcir la pièce. Après ouverture du moule, la pièce finale moulée peut être sortie et forme un objet fini prêt à être monté et/ou utilisé.

Selon un exemple d'aube composite réalisée conformément à l'invention en recourant à ce type de préforme selon les figures 2 à 22, on peut citer une préforme fabriquée à partir de fibres de carbone à haute résistance, de densité égale à 1,79 g/cm³, avec les paramètres suivants :
- première armure A (corps de pâle dans sa partie la plus épaisse, au centre) : 18 niveaux de fils de chaîne espacés en direction transversale d'un pas de 2,1 mm, après densification après le procédé d'injection par voie liquide « RTM » (Resin Transfer Moulding) cette première armure A possède une épaisseur de 20 mm , une valeur de pas P égale à 10 mm (c'est-à-dire une contexture en trame de 1 fil/cm), une valeur moyenne de 4° pour l'angle de liaison (d'embuvage) des fils de chaîne, un taux volumique de fibres de 60%, un pourcentage de fils de chaîne rapporté aux fils de trame de 69/31%, une masse surfacique totale du tissu de 21500 g/m², une masse surfacique en trame de 6600 g/m² (répartie en 37 niveaux de fils de trame, soit 180 g/m² pour chaque niveau de trame) ;
- deuxième armure B (pied de la pâle dans sa partie la plus épaisse, au centre) : 32 niveaux de fils de chaîne espacés en direction transversale d'un pas de 2,1 mm, après densification après le procédé d'injection par voie liquide « RTM » (Resin Transfer Moulding) cette deuxième armure B possède une épaisseur de 79mm , une valeur de pas P' en direction longitudinale égale à 2,8 mm (c'est-à-dire une contexture en trame de 3,57 fils/cm), une valeur moyenne de 3° pour l'angle de liaison (d'embuvage) des fils de chaîne, un taux volumique de fibres de 49%, un pourcentage de fils de chaîne rapporté aux fils de trame de 40/60% une masse surfacique totale du tissu de 69000g/m², une masse surfacique en trame de 41700g/m² (répartie en 65 niveaux de fils de trame, soit 640g/m² pour chaque niveau de trame).

Les fibres de carbone qui sont utilisées présentent les caractéristiques mécaniques intrinsèques suivantes :
E (module d'élasticité de Young) =280 GPa ;
σ (contrainte de rupture) =5,5 Gpa.

Comme liant, on a utilisé une résine époxyde à hautes performances vendue sous la référence PR 520 par la société CYTEC.

Avec un tel matériau composite, on obtient les propriétés mécaniques suivantes :
- première armure A (corps de pâle) :
   E chaîne (traction) = ou >90 GPa
   E trame (traction) = ou >40 GPa
   σ chaîne (traction) = ou >700 MPa
   σ trame (traction) = ou > 210 MPa
   σ chaîne (compression) = ou > 450 MPa
   σ trame (compression) = ou >200 MPa
- deuxième armure B (pied et échasse) :
   E chaîne (traction) = ou >30 GPa
   E trame (traction) = ou >80 GPa
   σ chaîne (traction) = ou >300 MPa
   σ trame (traction) = ou > 500 MPa
   σ chaîne (compression) = ou >200 MPa
   σ trame (compression) = ou > 500 MPa

A titre de comparaison, on notera également que la résistance à la compression de l'armure « 2,5D » ou « interlock » (voir l'enseignement du document FR2610951) est de 300MPa, contre une valeur de 450 MPa obtenue avec la première armure de la préforme selon l'invention.

L'aube selon la présente invention comprenant une préforme en fils ou fibres tissé(e)s en trois dimensions est donc de préférence utilisée pour la réalisation d'une aube de soufflante, notamment à large corde, en matériau composite, destinée à un moteur d'avion, en particulier pour un turbo-réacteur.

Il faut noter que pour réaliser cette préforme, la fibre de carbone peut être remplacée par d'autres types de fibres telles que fibres de verre, fibres d'aramide, de silice ou de céramique.

En outre, cette préforme peut non seulement être transformée par procédé d'injection par voie liquide « RTM » (Resin Transfer Moulding) pour l'obtention d'un matériau composite structural, mais également par toute autre technique d'injection ou par toute autre technique adaptée telle que l'infusion sous vide.

## Revendications

1. Préforme d'aube de turbomachine composite comprenant des fils ou fibres tissé(e)s en trois dimensions , ladite préforme étant formée de fils de chaîne et de fils de trame; la direction des fils de chaîne formant la direction longitudinale de la préforme, **caractérisée en ce que** ladite préforme comporte au moins une première partie, réalisée selon une première armure (A), formant la pale de l'aube, et une deuxième partie, réalisée selon une deuxième armure (B), formant le pied de l'aube, **en ce que** la première partie et la deuxième partie sont séparées par une zone de transition dans laquelle la première armure est progressivement modifiée pour aboutir à la deuxième armure, ce par quoi on obtient une diminution au moins de l'épaisseur de l'aube entre la deuxième partie et la première partie.

2. Péforme selon la revendication 1, **caractérisée en ce que** ladite première partie et ladite deuxième partie ne présentent pas le même nombre de fils de chaîne.

3. Préforme selon la revendication 1, **caractérisée en ce que** lesdits fils ou fibres appartiennent au groupe formé des fibres de carbone, des fibres de verre, des fibres de silice, des fibres de carbure de silicium, des fibres d'alumine, des fibres aramides et des fibres de polyamides aromatiques.

4. Préforme selon l'une quelconque des revendications précédentes, **caractérisée en ce que** l'angle d'embuvage des fils de chaîne est compris entre 2 et 10°.

5. Préforme selon l'une quelconque des revendications précédentes, **caractérisée en ce que** ladite première partie et ladite deuxième partie présentent un rapport volumique chaîne/trame différent.

6. Préforme selon la revendication 5, **caractérisée en ce que** ladite première partie présente un rapport volumique chaîne/trame compris entre 80/20% et 50/50% et **en ce que** ladite deuxième partie présente un rapport volumique chaîne/trame compris entre 30/70% et 50/50%.

7. Préforme selon l'une quelconque des revendications précédentes, **caractérisée en ce que** le titre des fils de chaîne varie entre le bord et le reste de l'aube, les fils de chaîne du bord étant plus fins.

8. Préforme selon la revendication 7, **caractérisée en ce que** le titre des fils de chaîne du bord de l'aube est de l'ordre de 900 tex et **en ce que** le titre des fils de chaîne du reste de l'aube est de l'ordre de 1800 tex.

9. Préforme selon l'une quelconque des revendications précédentes, **caractérisée en ce que** la première armure (A) présente un motif de base comprenant au moins trente-six fils de trame (1 à 36) disposés en quinconce en alternant des colonnes (C2, C4, C6, C8) d'au moins quatre fils de trame superposés dans une direction verticale, séparées dans une direction longitudinale par un pas (P), et des colonnes (C1, C3, C5, C7) d'au moins cinq fils de trame superposés, séparées par le même pas (P), les fils de trame (1 à 36) étant répartis en au moins huit colonnes (C1 à C8) s'étendant dans une direction verticale, les fils de trame (1 à 36) étant ainsi disposés sur au moins neuf niveaux (N1 à N9), et au moins vingt-huit fils de chaîne (51 à 78) disposés sur au moins huit plans verticaux parallèles (P1 à P8) entre eux en direction transversale, avec une alternance de plans d'un premier type (P1, P3, P5, P7), contenant au moins quatre fils de chaîne parallèles superposés, et de plans d'un deuxième type (P2, P4, P6, P8) contenant au moins trois fils de chaîne parallèles superposés, lesdits plans d'un premier type (P1, P3, P5, P7) ayant :
- un premier fil de chaîne (51, 58, 65, 72) reliant un fil de trame extrême supérieur (1, 19, 10, 28) d'une colonne (C1, C5, C3, C7) d'au moins cinq fils de trame au fil de trame intermédiaire supérieur (20, 2, 29, 11) d'une colonne (C5, C1, C7, C3) d'au moins cinq fils de trame espacée de la colonne précédente par au moins deux pas (P), et revenant sur un fil de trame extrême supérieur (1, 19, 10, 28)) d'une colonne (C1, C5, C3, C7) d'au moins cinq fils de trame, espacée de la première colonne par au moins quatre pas (P),
- un deuxième fil de chaîne (52, 59, 66, 73) reliant un fil de trame intermédiaire supérieur (2, 20, 11, 29) d'une colonne (C1, C5, C3, C7) d'au moins cinq fils de trame au fil de trame médian (21, 3, 30, 12) d'une colonne (C5, C1, C7, C3) d'au moins cinq fils de trame espacée de la colonne précédente par au moins deux pas (P), et revenant sur un fil de trame intermédiaire supérieur (2, 20, 11, 29) d'une colonne (C1, C5, C3, C7) d'au moins cinq fils de trame, espacée de la première colonne par au moins quatre pas (P),
- un troisième fil de chaîne (53, 60, 67, 74) reliant un fil de trame médian (3, 21, 12, 30) d'une colonne (C1, C5, C3, C7) d'au moins cinq fils de trame au fil de trame intermédiaire inférieur (22, 4, 31, 13) d'une colonne (C5, C1, C7, C3) d'au moins cinq fils de trame espacée de la colonne précédente par au moins deux pas (P), et revenant sur un fil de trame médian (3, 21, 12, 30) d'une colonne (C1, C5, C3, C7) d'au moins cinq fils de trame, espacée de la première colonne par au moins quatre pas (P),
- un quatrième fil de chaîne (54, 61, 68, 75) reliant un fil de trame intermédiaire inférieur (4, 22, 13, 31) d'une colonne (C1, C5, C3, C7) d'au moins cinq fils de trame au fil de trame extrême inférieur (23, 5, 32, 14) d'une colonne (C5, C1, C7, C3) d'au moins cinq fils de trame espacée de la colonne précédente par au moins deux pas (P), et revenant sur un fil de trame intermédiaire inférieur (4, 22, 13, 31) d'une colonne (C1, C5, C3, C7) d'au moins cinq fils de trame, espacée de la première colonne par au moins quatre pas (P),
lesdits plans d'un deuxième type (P2, P4, P6, P8) ayant :
- un premier fil de chaîne (55, 62, 69, 76) reliant un fil de trame extrême supérieur (15, 33, 6, 24) d'une colonne (C4, C8, C2, C6) d'au moins quatre fils de trame au fil de trame intermédiaire supérieur (34, 16, 23, 7) d'une colonne (C8, C4, C6, C2) d'au moins quatre fils de trame espacée de la colonne précédente par au moins deux pas (P), et revenant sur un fil de trame extrême supérieur (15, 33, 6, 24) d'une colonne (C4, C8, C2, C6) d'au moins quatre fils de trame, espacée de la première colonne par au moins quatre pas (P),
- un deuxième fil de chaîne (56, 63, 70, 77) reliant un fil de trame intermédiaire supérieur (16, 34, 7, 25) d'une colonne (C4, C8, C2, C6) d'au moins quatre fils de trame au fil de trame intermédiaire inférieur (35, 17, 24, 8) d'une colonne (C8, C4, C6, C2) d'au moins quatre fils de trame espacée de la colonne précédente par au moins deux pas (P), et revenant sur un fil de trame intermédiaire supérieur (16, 34, 7, 25) d'une colonne (C4, C8, C2, C6) d'au moins quatre fils de trame, espacée de la première colonne par au moins quatre pas (P),
- un troisième fil de chaîne (57, 64, 71, 78) reliant un fil de trame intermédiaire inférieur (17, 35, 8, 24) d'une colonne (C4, C8, C2, C6) d'au moins quatre fils de trame au fil de trame extrême inférieur (36, 18, 25, 9) d'une colonne (C4, C8, C2, C6) d'au moins quatre fils de trame espacée de la colonne précédente par au moins deux pas (P), et revenant sur un fil de trame intermédiaire inférieur (17, 35, 8, 24) d'une colonne (C4, C8, C2, C6) d'au moins quatre fils de trame, espacée de la première colonne par au moins quatre pas (P).

10. Préforme selon l'une quelconque des revendications précédentes, **caractérisée en ce que** la deuxième armure (B) présente un motif de base comprenant au moins quarante-cinq fils de trame (1' à 45') disposés en quinconce en alternant des colonnes (C2', C4', C6', C8', C10') d'au moins quatre fils de trame superposés dans une direction verticale, séparées dans une direction longitudinale par un pas (P'), et des colonnes (C1', C3', C5', C7', C9') d'au moins cinq fils de trame superposés, séparées par le même pas (P'), les fils de trame (1' à 45') étant répartis en au moins dix colonnes (C1' à C10') s'étendant dans une direction verticale, les fils de trame (1' à 45') étant ainsi disposés sur au moins neuf niveaux (N1' à N9'), et au moins quarante fils de chaîne (51' à 90') disposés sur au moins dix plans verticaux parallèles (P1' à P10') entre eux en direction transversale, chaque plan contenant au moins quatre fils de chaîne parallèles superposés, avec une alternance de plans d'un premier type (P1', P3', P5', P7', P9') et de plans d'un deuxième type (P2', P4', P6', P8', P10'), lesdits plans d'un premier type (P1', P3', P5', P7', P9') ayant :
- un premier fil de chaîne (51', 59', 67', 75', 83') reliant un fil de trame extrême supérieur (1', 28', 10', 37', 19') d'une colonne (C1', C7', C3', C9', C5') d'au moins cinq fils de trame au fil de trame extrême supérieur (24', 6', 33', 15', 42') d'une colonne (C6', C2', C8', C4', C10') d'au moins quatre fils de trame espacée de la colonne précédente par au moins deux pas et demi (P'), et revenant sur un fil de trame extrême supérieur (1', 28', 10', 37', 19') d'une colonne (C1', C7', C3', C9', C5') d'au moins cinq fils de trame, espacée de la première colonne par au moins cinq pas (P'),
- un deuxième fil de chaîne (52', 60', 68', 76', 84') reliant un fil de trame intermédiaire supérieur (2', 29', 11', 38', 20') d'une colonne (C1', C7', C3', C9', C5') d'au moins cinq fils de trame au fil de trame intermédiaire supérieur (25', 7', 34', 16', 43') d'une colonne (C6', C2', C8', C4', C10') d'au moins quatre fils de trame espacée de la colonne précédente par au moins deux pas et demi (P'), et revenant sur un fil de trame intermédiaire supérieur (2', 29', 11', 38', 20') d'une colonne (C1', C7', C3', C9', C5') d'au moins cinq fils de trame, espacée de la première colonne par au moins cinq pas (P'),
- un troisième fil de chaîne (53', 61', 69', 77', 85') reliant un fil de trame médian (3', 30', 12', 39', 21') d'une colonne (C1', C7', C3', C9', C5') d'au moins cinq fils de trame au fil de trame intermédiaire inférieur (26', 8', 35', 17', 44') d'une colonne (C6', C2', C8', C4', C10') d'au moins quatre fils de trame espacée de la colonne précédente par au moins deux pas et demi (P'), et revenant sur un fil de trame médian (3', 30', 12', 39', 21') d'une colonne (C1', C1, C3', C9', C5') d'au moins cinq fils de trame, espacée de la première colonne par au moins cinq pas (P'),
- un quatrième fil de chaîne (54', 62', 70', 78', 86') reliant un fil de trame intermédiaire inférieur (4', 31', 13', 40', 22') d'une colonne (C1', C7', C3', C9', C5') d'au moins cinq fils de trame au fil de trame extrême inférieur (27', 9', 36', 18', 45') d'une colonne (C6', C2', C8', C4', C10') d'au moins quatre fils de trame espacée de la colonne précédente par au moins deux pas et demi (P'), et revenant sur un fil de trame intermédiaire inférieur(4', 31', 13', 40', 22') d'une colonne (C1', C7', C3', C9', C5') d'au moins cinq fils de trame, espacée de la première colonne par au moins cinq pas (P'), lesdits plans d'un deuxième type (P2', P4', P6', P8', P10') ayant :
- un premier fil de chaîne (55', 63', 71', 79', 87') reliant un fil de trame extrême supérieur (15', 42', 24', 6', 33') d'une colonne (C4', C10', C6', C2', C8') d'au moins quatre fils de trame au fil de trame intermédiaire supérieur (38', 20', 2', 29', 11') d'une colonne (C9', C5', C1', C7, C3') d'au moins cinq fils de trame espacée de la colonne précédente par au moins deux pas et demi (P'), et revenant sur un fil de trame extrême supérieur (15', 42', 24', 6', 33') d'une colonne (C4', C10', C6', C2', C8') d'au moins quatre fils de trame, espacée de la première colonne par au moins cinq pas (P'),
- un deuxième fil de chaîne (56', 64', 72', 80', 88') reliant un fil de trame intermédiaire supérieur (16', 43', 25', 7', 34') d'une colonne (C4', C10', C6', C2', C8') d'au moins quatre fils de trame au fil de trame médian (39', 21', 3', 30', 12') d'une colonne (C9', C5', C5', C7, C3') d'au moins cinq fils de trame espacée de la colonne précédente par au moins deux pas et demi (P'), et revenant sur un fil de trame intermédiaire supérieur (16', 43', 25', 7', 34') d'une colonne (C4', C10', C6', C2', C8') d'au moins quatre fils de trame, espacée de la première colonne par au moins cinq pas (P'),
- un troisième fil de chaîne (57', 65', 73', 81', 89') reliant un fil de trame intermédiaire inférieur (17', 44', 26', 8', 35') d'une colonne (C4', C10', C6', C2', C8') d'au moins quatre fils de trame au fil de trame intermédiaire inférieur (40', 22', 4', 31', 13') d'une colonne (C9', C5', C1', C7, C3') d'au moins cinq fils de trame espacée de la colonne précédente par au moins deux pas et demi (P'), et revenant sur un fil de trame intermédiaire inférieur (17', 44', 26', 8', 35') d'une colonne (C4', C10', C6', C2', C8') d'au moins quatre fils de trame, espacée de la première colonne par au moins cinq pas (P'),
- un quatrième fil de chaîne (58', 66', 74', 82', 90') reliant un fil de trame extrême inférieur (18', 45', 27', 9', 36') d'une colonne (C4', C10', C6', C2', C8') d'au moins quatre fils de trame au fil de trame extrême inférieur (41', 23', 5', 32', 14') d'une colonne (C9', C5', C5', C7, C3') d'au moins cinq fils de trame espacée de la colonne précédente par au moins deux pas et demi (P'), et revenant sur un fil de trame extrême inférieur (18', 45', 27', 9', 36') d'une colonne (C4', C10', C6', C2', C8') d'au moins quatre fils de trame, espacée de la première colonne par au moins cinq pas (P'), les groupes parallèles de quatre fils de chaîne (51', 52', 53', 54' ; 55', 56', 57' ,58' ;59' ,60', 61' ,62' ; 63', 64', 65', 66' ; 67' , 68', 69', 70' ; 71', 72', 73' ,74' ; 75', 76', 77', 78' ; 79', 80', 81', 82' ; 83', 84', 85', 86' ; 87', 88', 89', 90') étant décalées longitudinalement du pas (P') d'un plan au plan voisin.

11. Préforme selon l'une quelconque des revendications précédentes, **caractérisée en ce que** la deuxième partie de l'aube présente une zone de coeur avec des fils de trame plus gros ayant un titre différent de celui des fils de trame qui entourent ladite zone de coeur.

12. Préforme selon la revendication 11, **caractérisée en ce que** le titre des fils de trame de la zone de coeur de la deuxième partie de l'aube est de l'ordre de 3600 tex et **en ce que** le titre des fils de trame entourant ladite zone de coeur est de l'ordre de 1800 tex.

13. Préforme selon l'une quelconque des revendications selon l'une quelconque revendications précédentes, **caractérisée en ce qu'**elle constitue une aube de soufflante pour turbo-réacteur.

14. Aube de turbomachine composite comportant une préforme selon l'une quelconque des revendications 1 à 13.

15. Aube de turbomachine selon la revendication 14, **caractérisée en ce qu'**elle comporte en outre un liant maintenant la disposition relative entre les fils de la préforme.

16. Aube selon la revendication 15, **caractérisée en ce que** ledit liant appartient au groupe formé des résines organiques, des produits réfractaires et des métaux.

17. Soufflante de turbomachine comportant des aubes composites selon l'une quelconque des revendications 14 à 16.

18. Turbomachine comportant des aubes composites selon l'une quelconque des revendications 14 à 16.

19. Procédé de fabrication d'une aube de turbomachine, **caractérisé en ce qu'**il comprend les étapes suivantes :
- on tisse des fils de chaîne et des fils de trame afin de former une préforme en fils ou fibres tissés en trois dimensions, formée de fils de chaîne et de fils de trame, la direction des fils de chaîne formant la direction longitudinale de la préforme, ladite préforme comportant au moins une première partie réalisée selon une première armure (A) et une deuxième partie réalisée selon une deuxième armure (B), ladite première partie et ladite deuxième partie étant séparées par une zone de transition dans laquelle la première armure est progressivement modifiée pour aboutir à la deuxième armure, ce par quoi on obtient une diminution au moins de l'épaisseur de l'aube entre la deuxième partie et la première partie ,
- on découpe ladite préforme selon la forme et les dimensions des parties constitutives de l'aube ;
- on fournit un moule dans lequel on place ladite préforme ;
- on injecte dans ledit moule un liant comprenant une résine thermodurcissable afin d'imprégner toute la préforme ;
- on chauffe ledit moule ; et
- on sort du moule une pièce moulée.

## Claims

1. A composite turbomachine blade preform comprising yarns or fibers woven in three dimensions, said preform being made up of warp yarns and of weft yarns, the direction of the warp yarns forming the longitudinal direction of the preform, the preform being **characterized in that** said preform comprises at least a first portion made with a first weave (A) and forming the airfoil of the blade, and a second portion made using a second weave (B) and forming the root of the blade, and **in that** the first portion and the second portion are united by a transition zone in which the first weave is progressively modified to end up with the second weave, thereby obtaining a reduction at least in the thickness of the blade between the second portion and the first portion.

2. A preform according to claim 1, **characterized in that** said first portion and said second portion do not present the same number of warp yarns.

3. A preform according to claim 1, **characterized in that** said yarns or fibers belong to the group constituted by carbon fibers, glass fibers, silica fibers, silicon carbide fibers, aluminum fibers, aramid fibers, and aromatic polyamide fibers.

4. A preform according to any preceding claim, **characterized in that** the shrinkage angle of the warp yarns lies in the range 2° to 10°.

5. A preform according to any preceding claim, **characterized in that** said first portion and said second portion present different warp/weft volume ratios.

6. A preform according to claim 5, **characterized in that** said first portion presents a warp/weft volume ratio lying in the range 80/20% to 50/50%, and **in that** said second portion presents a warp/weft volume ratio lying in the range 30/70% to 50/50%.

7. A preform according to any preceding claim, **characterized in that** the count of the warp yarns varies between the edge and the remainder of the blade, the warp yarns at the edge being finer.

8. A preform according to claim 7, **characterized in that** the count of the warp yarns at the edge of the blade is about 900 tex and **in that** the count of the warp yarns in the remainder of the blade is about 1800 tex.

9. A preform according to any preceding claim, **characterized in that** the first weave (A) presents a base pattern comprising firstly at least thirty-six weft yarns (1 to 36) disposed in a staggered configuration of columns (C2, C4, C6, C8) having at least four weft yarns superposed in a vertical direction and spaced apart in a longitudinal direction by a step size (P), alternating with columns (C1, C3, C5, C7) of at least five superposed weft yarns, the columns being separated by the same step size (P), the weft yarns (1 to 36) being distributed in at least eight columns (C1 to C8) extending in a vertical direction, the weft yarns (1 to 36) thus being disposed on at least nine levels (N1 to N9), and secondly at least twenty-four warp yarns (51 to 78) disposed in at least eight vertical planes (P1 to P8) that are parallel to one another in a transverse direction alternating between planes of a first type (P1, P3, P5, P7) containing at least four superposed parallel warp yarns, and planes of a second type (P2, P4, P6, P8) containing at least three superposed parallel warp yarns, said planes of a first type (P1, P3, P5, P7) having:
- a first warp yarn (51, 58, 65, 72) connecting a top end weft yarn (1, 19, 10, 28) of a column (C1, C5, C3, C7) of at least five weft yarns to the upper intermediate weft yarn (20, 2, 29, 11) of a column (C5, C1, C7, C3) of at least five weft yarns spaced apart from the preceding column by at least two steps (P), and returning onto a top end weft yarn (1, 19, 10, 28)) of a column (C1, C5, C3, C7) of at least five weft yarns, spaced apart from the first column by at least four steps (P),
- a second warp yarn (52, 59, 66, 73) connecting an upper intermediate weft yarn (2, 20, 11, 29) of a column (C1, C5, C3, C7) of at least five weft yarns to the middle weft yarn (21, 3, 30, 12) of a column (C5, C1, C7, C3) of at least five weft yarns spaced apart from the preceding column by at least two steps (P), and returning onto an upper intermediate weft yarn (2, 20, 11, 29) of a column (C1, C5, C3, C7) of at least five weft yarns, spaced apart from the first column by at least four steps (P),
- a third warp yarn (53, 60, 67, 74) connecting a middle weft yarn (3, 21, 12, 30) of a column (C1, C5, C3, C7) of at least five weft yarns to the lower intermediate weft yarn (22, 4, 31, 13) of a column (C5, C1, C7, C3) of at least five weft yarns spaced apart from the preceding column by at least two steps (P), and returning onto a middle weft yarn (3, 21, 12, 30) of a column (C1, C5, C3, C7) of at least five weft yarns, spaced apart from the first column by at least four steps (P),
- a fourth warp yarn (54, 61, 68, 75) connecting a lower intermediate weft yarn (4, 22, 13, 31) of a column (C1, C5, C3, C7) of at least five weft yarns to the bottom end weft yarn (23, 5, 32, 14) of a column (C5, C1, C7, C3) of at least five weft yarns spaced apart from the preceding column by at least two steps (P), and returning onto a lower intermediate weft yarn (4, 22, 13, 31) of a column (C1, C5, C3, C7) of at least five weft yarns, spaced apart from the first column by at least four steps (P),
said planes of a second type (P2, P4, P6, P8) having:
- a first warp yarn (55, 62, 69, 76) connecting a top end weft yarn (15, 33, 6, 24) of a column (C4, C8, C2, C6) of at least four weft yarns to the upper intermediate weft yarn (34, 16, 23, 7) of a column (C8, C4, C6, C2) of at least four weft yarns spaced apart from the preceding column by at least two steps (P), and returning onto a top end weft yarn (15, 33, 6, 24) of a column (C4, C8, C2, C6) of at least four weft yarns, spaced apart from the first column by at least four steps (P),
- a second warp yarn (56, 63, 70, 77) connecting an upper intermediate weft yarn (16, 34, 7, 25) of a column (C4, C8, C2, C6) of at least four weft yarns to the lower intermediate weft yarn (35, 17, 24, 8) of a column (C8, C4, C6, C2) of at least four weft yarns spaced apart from the preceding column by at least two steps (P), and returning onto an upper intermediate weft yarn (16, 34, 7, 25) of a column (C4, C8, C2, C6) of at least four weft yarns, spaced apart from the first column by at least four steps (P),
- a third warp yarn (57, 64, 71, 78) connecting a lower intermediate weft yarn (17, 35, 8, 24) of a column (C4, C8, C2, C6) of at least four weft yarns to the bottom end weft yarn (36, 18, 25, 9) of a column (C4, C8, C2, C6) of at least four weft yarns spaced apart from the preceding column by at least two steps (P), and returning onto a lower intermediate weft yarn (17, 35, 8, 24) of a column (C4, C8, C2, C6) of at least four weft yarns, spaced apart from the first column by at least four steps (P).

10. A preform according to any preceding claim, **characterized in that** the second weave (B) presents a base pattern comprising firstly at least forty-five weft yarns (1' to 45') disposed in a staggered configuration of columns (C2', C4', C6', C8', C10') of at least four weft yarns superposed in a vertical direction, the columns being separated in a longitudinal direction by a step size (P'), and being in a staggered configuration relative to columns (C1', C3', C5', C7', C9') of at least five superposed weft yarns, the columns being separated by the same step size (P'), the weft yarns (1' to 45') being distributed in at least ten columns (C1' to C10') extending in a vertical direction, the weft yarns (1' to 45') thus being disposed on at least nine levels (N1' to N9'), and secondly at least forty warp yarns (51' to 90') disposed in at least ten vertical planes (P1' to P10') that are parallel to one another in a transverse direction, each plane containing at least four superposed parallel warp yarns with alternating planes of a first type (P1', P3', P5', P7', P9') and planes of a second type (P2', P4', P6', P8', P10'), said planes of a first type (P1', P3', P5', P7', P9') having:
- a first warp yarn (51', 59', 67', 75', 83') connecting a top end weft yarn (1', 28', 10', 37', 19') of a column (C1', C7', C3', C9', C5') of at least five weft yarns to the top end weft yarn (24', 6', 33', 15', 42') of a column (C6', C2', C8', C4', C10') of at least four weft yarns spaced apart from the preceding column by at least two and a half steps (P'), and returning onto a top end weft yarn (1', 28', 10', 37', 19') of a column (C1', C7', C3', C9', C5') of at least five weft yarns, spaced apart from the first column by at least five steps (P'),
- a second warp yarn (52', 60', 68', 76', 84') connecting an upper intermediate weft yarn (2', 29', 11', 38', 20') of a column (C1', C7', C3', C9', C5') of at least five weft yarns to the upper intermediate weft yarn (25', 7', 34', 16', 43') of a column (C6', C2', C8', C4', C10') of at least four weft yarns spaced apart from the preceding column by at least two and a half steps (P'), and returning onto an upper intermediate weft yarn (2', 29', 11', 38', 20') of a column (C1', C7', C3', C9', C5') of at least five weft yarns, spaced apart from the first column by at least five steps (P'),
- a third warp yarn (53', 61', 69', 77', 85') connecting a middle weft yarn (3', 30', 12', 39', 21') of a column (C1', C7', C3', C9', C5') of at least five weft yarns to the lower intermediate weft yarn (26', 8', 35', 17', 44') of a column (C6', C2', C8', C4', C10') of at least four weft yarns spaced apart from the preceding column by at least two and a half steps (P'), and returning onto a middle weft yarn (3', 30', 12', 39', 21') of a column (C1', C7', C3', C9', C5') of at least five weft yarns, spaced apart from the first column by at least five steps (P'),
- a fourth warp yarn (54', 62', 70', 78', 86') connecting a lower intermediate weft yarn (4', 31', 13', 40', 22') of a column (C1', C7', C3', C9', C5') of at least five weft yarns to the bottom end weft yarn (27', 9', 36', 18', 45') of a column (C6', C2', C8', C4', C10') of at least four weft yarns spaced apart from the preceding column by at least two and a half steps (P'), and returning onto a lower intermediate weft yarn (4', 31', 13', 40', 22') of a column (C1', C7', C3', C9', C5') of at least five weft yarns, spaced apart from the first column by at least five steps (P'),
said planes of a second type (P2', P4', P6', P8', P10') having:
- a first warp yarn (55', 63', 71', 79', 87') connecting a top end weft yarn (15', 42', 24', 6', 33') of a column (C4', C10', C6', C2', C8') of at least four weft yarns to the upper intermediate weft yarn (38', 20', 2', 29', 11') of a column (C9', C5', C1', C7, C3') of at least five weft yarns spaced apart from the preceding column by at least two and a half steps (P'), and returning onto a top end weft yarn (15', 42', 24', 6', 33') of a column (C4', C10', C6', C2', C8') of at least four weft yarns, spaced apart from the first column by at least five steps (P'),
- a second warp yarn (56', 64', 72', 80', 88') connecting an upper intermediate weft yarn (16', 43', 25', 7', 34') of a column (C4', C10', C6', C2', C8') of at least four weft yarns to the middle weft yarn (39', 21', 3', 30', 12') of a column (C9', C5', C1', C7, C3') of at least five weft yarns spaced apart from the preceding column by at least two and a half steps (P'), and returning onto an upper intermediate weft yarn (16', 43', 25', 7', 34') of a column (C4', C10', C6', C2', C8') of at least four weft yarns, spaced apart from the first column by at least five steps (P'),
- a third warp yarn (57', 65', 73', 81', 89') connecting a lower intermediate weft yarn (17', 44', 26', 8', 35') of a column (C4', C10', C6', C2', C8') of at least four weft yarns to the lower intermediate weft yarn (40', 22', 4', 31', 13') of a column (C9', C5', C1', C7, C3') of at least five weft yarns spaced apart from the preceding column by at least two and a half steps (P'), and returning onto a lower intermediate weft yarn (17', 44', 26', 8', 35') of a column (C4', C10', C6', C2', C8') of at least four weft yarns, spaced apart from the first column by at least five steps (P'),
- a fourth warp yarn (58', 66', 74', 82', 90') connecting a bottom end weft yarn (18', 45', 27', 9', 36') of a column (C4', C10', C6', C2', C8') of at least four weft yarns to the bottom end weft yarn (41', 23', 5', 32', 14') of a column (C9', C5', C1', C7, C3') of at least five weft yarns spaced apart from the preceding column by at least two and a half steps (P'), and returning onto a bottom end weft yarn (18', 45', 27', 9', 36') of a column (C4', C10', C6', C2', C8') of at least four weft yarns, spaced apart from the first column by at least five steps (P'),
the parallel groups of four warp yarns (51', 52', 53', 54' ; 55', 56', 57', 58', 59', 60', 61', 62', 63', 64', 65', 66', 67', 68', 69', 70', 71', 72', 73', 74', 75', 76', 77', 78', 79', 80', 81', 82', 83', 84', 85', 86', 87', 88', 89', 90') being offset longitudinally by a step (P') of the same size as the step from one plane to the adjacent plane.

11. A preform according to any preceding claim, **characterized in that** the second portion of the blade presents a core zone with weft yarns that are larger, having a count that is different from that of the weft yarns surrounding said core zone.

12. A preform according to claim 11, **characterized in that** the count of the weft yarns in the core zone of the second portion of the blade is about 3600 tex and **in that** the count of the weft yarns surrounding said core zone is about 1800 tex.

13. A preform according to any preceding claim, **characterized in that** it constitutes a fan blade for a turbojet.

14. A composite turbomachine blade comprising a preform according to any of claims 1 to 13.

15. A turbomachine blade according to claim 14, **characterized in that** it comprises further a binder maintaining the relative disposition between the yarns of the preform.

16. A blade according to claim 15, **characterized in that** said binder belongs to the group formed by organic resins, refractory substances, and metals.

17. A turbomachine fan comprising composite blades according to any of claims 14 to 16.

18. A turbomachine comprising composite blades according to any of claims 14 to 16.

19. A method of manufacturing a turbomachine blade, the method being **characterized in that** it comprises the following steps:
weaving warp yarns and weft yarns so as to form a preform of yarns or fibers that is woven in three dimensions, being made up of warp yarns and weft yarns, the direction of the warp yarns forming the longitudinal direction of the preform, said preform including at least a first portion made with a first weave (A) and a second portion made with a second weave (B), said first portion and said second portion being united by a transition zone in which the first weave is progressively modified to end up with the second weave, thereby obtaining a reduction at least in the thickness of the blade between the second portion and the first portion;
cutting said preform to the shape and dimensions of the component portions of the blade;
providing a mold in which said preform is placed;
injecting a binder into said mold in order to impregnate the entire preform, the binder comprising a thermosetting resin;
• heating said mold; and
• extracting a molded part from the mold.

## Patentansprüche

1. Vorform einer Verbundwerkstoff-Turbomaschinenschaufel, umfassend dreidimensional gewebte Fäden oder Fasern, wobei die Vorform von Kettfäden und Schußfäden gebildet ist, wobei die Richtung der Kettfäden die Längsrichtung der Vorform bildet, **dadurch gekennzeichnet, daß** die Vorform wenigstens ein in einer ersten Bindung (A) gefertigtes erstes Teil, das das Blatt der Schaufel bildet, und ein in einer zweiten Bindung (B) gefertigtes zweites Teil, das den Fuß der Schaufel bildet, umfaßt, daß das erste Teil und das zweite Teil durch einen Übergangsbereich getrennt sind, in dem die erste Bindung schrittweise geändert ist, um in die zweite Bindung überzugehen, wodurch eine Verringerung wenigstens der Dicke der Schaufel zwischen dem zweiten Teil und dem ersten Teil erreicht wird.

2. Vorform nach Anspruch 1, **dadurch gekennzeichnet, daß** das erste Teil und das zweite Teil nicht die gleiche Anzahl von Kettfäden aufweisen.

3. Vorform nach Anspruch 1, **dadurch gekennzeichnet, daß** die Fäden oder Fasern zu der Gruppe, welche von den Kohlenstoffasern, den Glasfasern, den Siliciumdioxidfasern, den Siliciumcarbidfasern, den Aluminiumoxidfasern, den Aramidfasern und den Fasern aus aromatischen Polyamiden gebildet ist, gehören.

4. Vorform nach einem der vorhergehenden Ansprüche, **dadurch gekennzeichnet, daß** der Verkürzungswinkel der Kettfäden zwischen 2 und 10° liegt.

5. Vorform nach einem der vorhergehenden Ansprüche, **dadurch gekennzeichnet, daß** das erste Teil und das zweite Teil ein unterschiedliches Kette/Schuß-Volumenverhältnis aufweisen.

6. Vorform nach Anspruch 5, **dadurch gekennzeichnet, daß** das erste Teile ein Kette/Schuß-Volumenverhältnis im Bereich zwischen 80/20 % und 50/50 % aufweist und daß das zweite Teile ein Kette/Schuß-Volumenverhältnis im Bereich zwischen 30/70 % und 50/50 % aufweist.

7. Vorform nach einem der vorhergehenden Ansprüche, **dadurch gekennzeichnet, daß** der Titer der Kettfäden zwischen dem Rand und dem Rest der Schaufel variiert, wobei die Kettfäden des Randes feiner sind.

8. Vorform nach Anspruch 7, **dadurch gekennzeichnet, daß** der Titer der Kettfäden des Randes der Schaufel in der Größenordnung von 900 tex liegt und daß der Titer der Kettfäden der restlichen Schaufel in der Größenordnung von 1800 tex liegt.

9. Vorform nach einem der vorhergehenden Ansprüche, **dadurch gekennzeichnet, daß** die erste Bindung (A) ein Grundmuster aufweist mit wenigstens sechsunddreißig Schußfäden (1 bis 36), die dadurch versetzt angeordnet sind, daß in einer Längsrichtung durch einen Schritt (P) voneinander getrennte Spalten (C2, C4, C6, C8) aus wenigstens vier in einer vertikalen Richtung übereinander angeordneten Schußfäden und durch den gleichen Schritt (P) getrennte Spalten (C1, C3, C5, C7) aus wenigstens fünf übereinander angeordneten Schußfäden abgewechselt werden, wobei die Schußfäden (1 bis 36) in wenigstens acht, in einer vertikalen Richtung verlaufenden Spalten (C1 bis C8) aufgeteilt sind, wobei die Schußfäden (1 bis 36) somit auf wenigstens neun Ebenen (N1 bis N9) angeordnet sind, sowie mit wenigstens achtundzwanzig Kettfäden (51 bis 78), die auf wenigstens acht, zueinander parallelen vertikalen Ebenen (P1 bis P8) in Querrichtung angeordnet sind, mit einem Wechsel von Ebenen eines ersten Typs (P1, P3, P5, P7), die wenigstens vier parallele, übereinander angeordnete Kettfäden enthalten, und von Ebenen eines zweiten Typs (P2, P4, P6, P8), die wenigstens drei parallele, übereinander angeordnete Kettfäden enthalten, wobei die Ebenen eines ersten Typs (P1, P3, P5, P7) aufweisen:
- einen ersten Kettfaden (51, 58, 65, 72), der einen äußersten oberen Schußfaden (1, 19, 10, 28) einer Spalte (C1, C5, C3, C7) aus wenigstens fünf Schußfäden mit dem oberen Zwischenschußfaden (20, 2, 29, 11) einer Spalte (C5, C1, C7, C3) aus wenigstens fünf Schußfäden, die von der vorhergehenden Spalte durch wenigstens zwei Schritte (P) getrennt ist, verbindet und der an einem äußersten oberen Schußfaden (1, 19, 10, 28) einer Spalte (C1, C5, C3, C7) aus wenigstens fünf Schußfäden, die von der ersten Spalte durch wenigstens vier Schritte (P) getrennt ist, zurückkommt,
- einen zweiten Kettfaden (52, 59, 66, 73), der einen oberen Zwischenschußfaden (2, 20, 11, 29) einer Spalte (C1, C5, C3, C7) aus wenigstens fünf Schußfäden mit dem mittleren Schußfaden (21, 3, 30, 12) einer Spalte (C5, C1, C7, C3) aus wenigstens fünf Schußfäden, die von der vorhergehenden Spalte durch wenigstens zwei Schritte (P) getrennt ist, verbindet und der an einem oberen Zwischenschußfaden (2, 20, 11, 29) einer Spalte (C1, C5, C3, C7) aus wenigstens fünf Schußfäden, die von der ersten Spalte durch wenigstens vier Schritte (P) getrennt ist, zurückkommt,
- einen dritten Kettfaden (53, 60, 67, 74), der einen mittleren Schußfaden (3, 21, 12, 30) einer Spalte (C1, C5, C3, C7) aus wenigstens fünf Schußfäden mit dem unteren Zwischenschußfaden (22, 4, 31, 13) einer Spalte (C5, C1, C7, C3) aus wenigstens fünf Schußfäden, die von der vorhergehenden Spalte durch wenigstens zwei Schritte (P) getrennt ist, verbindet und der an einem mittleren Schußfaden (3, 21, 12, 30) einer Spalte (C1, C5, C3, C7) aus wenigstens fünf Schußfäden, die von der ersten Spalte durch wenigstens vier Schritte (P) getrennt ist, zurückkommt,
- einen vierten Kettfaden (54, 61, 68, 75), der einen unteren Zwischenschußfaden (4, 22, 13, 31) einer Spalte (C1, C5, C3, C7) aus wenigstens fünf Schußfäden mit dem äußersten unteren Schußfaden (23, 5, 32, 14) einer Spalte (C5, C1, C7, C3) aus wenigstens fünf Schußfäden, die von der vorhergehenden Spalte durch wenigstens zwei Schritte (P) getrennt ist, verbindet und der an einem unteren Zwischenschußfaden (4, 22, 13, 31) einer Spalte (C1, C5, C3, C7) aus wenigstens fünf Schußfäden, die von der ersten Spalte durch wenigstens vier Schritte (P) getrennt ist, zurückkommt,
wobei die Ebenen eines zweiten Typs (P2, P4, P6, P8) aufweisen:
- einen ersten Kettfaden (55, 62, 69, 76), der einen äußersten oberen Schußfaden (15, 33, 6, 24) einer Spalte (C4, C8, C2, C6) aus wenigstens vier Schußfäden mit dem oberen Zwischenschußfaden (34, 16, 23, 7) einer Spalte (C8, C4, C6, C2) aus wenigstens vier Schußfäden, die von der vorhergehenden Spalte durch wenigstens zwei Schritte (P) getrennt ist, verbindet und der an einem äußersten oberen Schußfaden (15, 33, 6, 24) einer Spalte (C4, C8, C2, C6) aus wenigstens vier Schußfäden, die von der ersten Spalte durch wenigstens vier Schritte (P) getrennt ist, zurückkommt,
- einen zweiten Kettfaden (56, 63, 70, 77), der einen oberen Zwischenschußfaden (16, 34, 7, 25) einer Spalte (C4, C8, C2, C6) aus wenigstens vier Schußfäden mit dem unteren Zwischenschußfaden (35, 17, 24, 8) einer Spalte (C8, C4, C6, C2) aus wenigstens vier Schußfäden, die von der vorhergehenden Spalte durch wenigstens zwei Schritte (P) getrennt ist, verbindet und der an einem oberen Zwischenschußfaden (16, 34, 7, 25) einer Spalte (C4, C8, C2, C6) aus wenigstens vier Schußfäden, die von der ersten Spalte durch wenigstens vier Schritte (P) getrennt ist, zurückkommt,
- einen dritten Kettfaden (57, 64, 71, 78), der einen unteren Zwischenschußfaden (17, 35, 8, 24) einer Spalte (C4, C8, C2, C6) aus wenigstens vier Schußfäden mit dem äußersten unteren Schußfaden (36, 18, 25, 9) einer Spalte (C4, C8, C2, C6) aus wenigstens vier Schußfäden, die von der vorhergehenden Spalte durch wenigstens zwei Schritte (P) getrennt ist, verbindet und der an einem unteren Zwischenschußfaden (17, 35, 8, 24) einer Spalte (C4, C8, C2, C6) aus wenigstens vier Schußfäden, die von der ersten Spalte durch wenigstens vier Schritte (P) getrennt ist, zurückkommt.

10. Vorform nach einem der vorhergehenden Ansprüche, **dadurch gekennzeichnet, daß** die zweite Bindung (B) ein Grundmuster aufweist mit wenigstens fünfundvierzig Schußfäden (1' bis 45'), die dadurch versetzt angeordnet sind, daß in einer Längsrichtung durch einen Schritt (P') voneinander getrennte Spalten (C2', C4', C6', C8', C10') aus wenigstens vier in einer vertikalen Richtung übereinander angeordneten Fäden und durch den gleichen Schritt (P') getrennte Spalten (C1', C3', C5', C7', C9') aus wenigstens fünf übereinander angeordneten Schußfäden abgewechselt werden, wobei die Schußfäden (1' bis 45') in wenigstens zehn, in einer vertikalen Richtung verlaufenden Spalten (C1' bis C10') aufgeteilt sind, wobei die Schußfäden (1' bis 45') somit auf wenigstens neun Ebenen (N1' bis N9') angeordnet sind, sowie mit wenigstens vierzig Kettfäden (51' bis 90'), die auf wenigstens zehn, zueinander parallelen vertikalen Ebenen (P1' bis P10') in Querrichtung angeordnet sind, wobei jede Ebene wenigstens vier parallele, übereinander angeordnete Kettfäden enthält, mit einem Wechsel von Ebenen eines ersten Typs (P1', P3', P5', P7', P9') und von Ebenen eines zweiten Typs (P2', P4', P6', P8', P10'), wobei die Ebenen eines ersten Typs (P1' P3', P5', P7', P9') aufweisen:
- einen ersten Kettfaden (51', 59', 67', 75', 83'), der einen äußersten oberen Schußfaden (1 28', 10', 37', 19') einer Spalte (C1 C7', C3', C9', C5') aus wenigstens fünf Schußfäden mit dem äußersten oberen Schußfaden (24', 6', 33', 15', 42') einer Spalte (C6', C2', C8', C4', C10') aus wenigstens vier Schußfäden, die von der vorhergehenden Spalte durch wenigstens zweieinhalb Schritte (P') getrennt ist, verbindet und der an einem äußersten oberen Schußfaden (1', 28', 10', 37', 19') einer Spalte (C1 C7', C3', C9', C5') aus wenigstens fünf Schußfäden, die von der ersten Spalte durch wenigstens fünf Schritte (P') getrennt ist, zurückkommt,
- einen zweiten Kettfaden (52', 60', 68', 76', 84'), der einen oberen Zwischenschußfaden (2', 29', 11', 38', 20') einer Spalte (C1', C7', C3', C9', C5') aus wenigstens fünf Schußfäden mit dem oberen Zwischenschußfaden (25', 7', 34', 16', 43') einer Spalte (C6', C2', C8', C4', C10') aus wenigstens vier Schußfäden, die von der vorhergehenden Spalte durch wenigstens zweieinhalb Schritte (P') getrennt ist, verbindet und der an einem oberen Zwischenschußfaden (2', 29', 111', 38', 20') einer Spalte (C1 C7', C3', C9', C5') aus wenigstens fünf Schußfäden, die von der ersten Spalte durch wenigstens fünf Schritte (P') getrennt ist, zurückkommt,
- einen dritten Kettfaden (53', 61', 69', 77', 85'), der einen mittleren Schußfaden (3', 30', 12', 39', 21') einer Spalte (C1 C7', C3', C9', C5') aus wenigstens fünf Schußfäden mit dem unteren Zwischenschußfaden (26', 8', 35', 17', 44') einer Spalte (C6', C2', C8', C4', C10') aus wenigstens vier Schußfäden, die von der vorhergehenden Spalte durch wenigstens zweieinhalb Schritte (P') getrennt ist, verbindet und der an einem mittleren Schußfaden (3', 30', 12', 39', 21') einer Spalte (C1 C7', C3', C9', C5') aus wenigstens fünf Schußfäden, die von der ersten Spalte durch wenigstens fünf Schritte (P') getrennt ist, zurückkommt,
- einen vierten Kettfaden (54', 62', 70', 78', 86'), der einen unteren Zwischenschußfaden (4', 31 13', 40', 22') einer Spalte (C1 C7', C3', C9', C5') aus wenigstens fünf Schußfäden mit dem äußersten unteren Schußfaden (27', 9', 36', 18', 45') einer Spalte (C6', C2', C8', C4', C10') aus wenigstens vier Schußfäden, die von der vorhergehenden Spalte durch wenigstens zweieinhalb Schritte (P') getrennt ist, verbindet und der an einem unteren Zwischenschußfaden (4', 31', 13', 40', 22') einer Spalte (C1 C7', C3', C9', C5') aus wenigstens fünf Schußfäden, die von der ersten Spalte durch wenigstens fünf Schritte (P') getrennt ist, zurückkommt,
wobei die Ebenen eines zweiten Typs (P2', P4', P6', P8', P10') aufweisen:
- einen ersten Kettfaden (55', 63', 71 79', 87'), der einen äußersten oberen Schußfaden (15', 42', 24', 6', 33') einer Spalte (C4', C10', C6', C2', C8') aus wenigstens vier Schußfäden mit dem oberen Zwischenschußfaden (38', 20', 2', 29', 11') einer Spalte (C9', C5', C1', C7', C3') aus wenigstens fünf Schußfäden, die von der vorhergehenden Spalte durch wenigstens zweieinhalb Schritte (P') getrennt ist, verbindet und der an einem äußersten oberen Schußfaden (15', 42', 24', 6', 33') einer Spalte (C4', C10', C6', C2', C8') aus wenigstens vier Schußfäden, die von der ersten Spalte durch wenigstens fünf Schritte (P') getrennt ist, zurückkommt,
- einen zweiten Kettfaden (56', 64', 72', 80', 88'), der einen oberen Zwischenschußfaden (16', 43', 25', 7', 34') einer Spalte (C4', C10', C6', C2', C8') aus wenigstens vier Schußfäden mit dem mittleren Schußfaden (39', 21', 3', 30', 12') einer Spalte (C9', C5', C1', C7', C3') aus wenigstens fünf Schußfäden, die von der vorhergehenden Spalte durch wenigstens zweieinhalb Schritte (P') getrennt ist, verbindet und der an einem oberen Zwischenschußfaden (16', 43', 25', 7', 34') einer Spalte (C4', C10', C6', C2', C8') aus wenigstens vier Schußfäden, die von der ersten Spalte durch wenigstens fünf Schritte (P') getrennt ist, zurückkommt,
- einen dritten Kettfaden (57', 65', 73', 81 89'), der einen unteren Zwischenschußfaden (17', 44', 26', 8', 35') einer Spalte (C4', C10', C6', C2', C8') aus wenigstens vier Schußfäden mit dem unteren Zwischenschußfaden (40', 22', 4', 31 13') einer Spalte (C9', C5', C1', C7', C3') aus wenigstens fünf Schußfäden, die von der vorhergehenden Spalte durch wenigstens zweieinhalb Schritte (P') getrennt ist, verbindet und der an einem unteren Zwischenschußfaden (17', 44', 26', 8', 35') einer Spalte (C4', C10', C6', C2', C8') aus wenigstens vier Schußfäden, die von der ersten Spalte durch wenigstens fünf Schritte (P') getrennt ist, zurückkommt,
- einen vierten Kettfaden (58', 66', 74' 82', 90'), der einen äußersten unteren Schußfaden (18', 45', 27', 9', 36') einer Spalte (C4', C10', C6', C2', C8') aus wenigstens vier Schußfäden mit dem äußersten unteren Schußfaden (41 23', 5', 32', 14') einer Spalte (C9', C5', C1', C7', C3') aus wenigstens fünf Schußfäden, die von der vorhergehenden Spalte durch wenigstens zweieinhalb Schritte (P') getrennt ist, verbindet und der an einem äußersten unteren Schußfaden (18', 45', 27', 9', 36') einer Spalte (C4', C10', C6', C2', C8') aus wenigstens vier Schußfäden, die von der ersten Spalte durch wenigstens fünf Schritte (P') getrennt ist, zurückkommt, wobei die parallelen Gruppen aus vier Kettfäden (51', 52', 53', 54'; 55', 56', 57', 58'; 59', 60', 61 62'; 63', 64', 65', 66'; 67', 68', 69', 70'; 71 72', 73', 74'; 75', 76', 77', 78'; 79', 80', 81', 82'; 83', 84', 85', 86'; 87', 88', 89', 90') von einer Ebene zur benachbarten Ebene um den Schritt (P') in Längsrichtung versetzt sind.

11. Vorform nach einem der vorhergehenden Ansprüche, **dadurch gekennzeichnet, daß** das zweite Teil der Schaufel einen Kernbereich mit dickeren Schußfäden aufweist, die einen anderen Titer als die Schußfäden, welche den Kernbereich umgeben, haben.

12. Vorform nach Anspruch 11, **dadurch gekennzeichnet, daß** der Titer der Schußfäden des Kernbereichs des zweiten Teils der Schaufel in der Größenordnung von 3600 tex liegt und daß der Titer der Schußfäden, die den Kernbereich umgeben, in der Größenordnung von 1800 tex liegt.

13. Vorform nach einem der vorhergehenden Ansprüche, **dadurch gekennzeichnet, daß** sie eine Gebläseschaufel für ein Turbostrahltriebwerk bildet.

14. Verbundwerkstoff-Turbomaschinenschaufel, die eine Vorform nach einem der Ansprüche 1 bis 13 umfaßt.

15. Turbomaschinenschaufel nach Anspruch 14, **dadurch gekennzeichnet, daß** sie ferner ein Bindemittel umfaßt, das die Relativanordnung zwischen den Fäden der Vorform aufrechterhält.

16. Schaufel nach Anspruch 15, **dadurch gekennzeichnet, daß** das Bindemittel zu der Gruppe bestehend aus den organischen Harzen, den feuerfesten Produkten und den Metallen gehört.

17. Gebläse einer Turbomaschine, das Verbundwerkstoffschaufeln nach einem der Ansprüche 14 bis 16 umfaßt.

18. Turbomaschine, die Verbundwerkstoffschaufeln nach einem der Ansprüche 14 bis 16 umfaßt.

19. Verfahren zur Herstellung einer Turbomaschinenschaufel, **dadurch gekennzeichnet, daß** es die folgenden Schritte umfaßt:
- Kettfäden und Schußfäden werden gewebt, um eine Vorform aus dreidimensional gewebten Fäden oder Fasern zu erhalten, die von Kettfäden und Schußfäden gebildet ist, wobei die Richtung der Kettfäden die Längsrichtung der Vorform bildet, wobei die Vorform wenigstens ein in einer ersten Bindung (A) gefertigtes erstes Teil und ein in einer zweiten Bindung (B) gefertigtes zweites Teil umfaßt, wobei das erste Teil und das zweite Teil durch einen Übergangsbereich getrennt sind, in dem die erste Bindung schrittweise geändert ist, um in die zweite Bindung überzugehen, wodurch eine Verringerung wenigstens der Dicke der Schaufel zwischen dem zweiten Teil und dem ersten Teil erreicht wird,
- die Vorform wird entsprechend der Form und den Abmessungen der Bestandteile der Schaufel zugeschnitten,
- es wird eine Form bereitgestellt, in der die Vorform angeordnet wird,
- in die Form wird ein einen Duroplast enthaltendes Bindemittel eingespritzt, um die gesamte Vorform zu imprägnieren,
- die Form wird erhitzt, und
- aus der Form wird ein Formteil entnommen.
